# EUROPEAN PATENT APPLICATION

(11) **EP 3 533 645 A1**
(43) Date of publication of application: **04.09.2019**
(21) Application number: 17864655.0
(22) Date of filing: 30.10.2017
(51) Int. Cl.: B60K 6/36, B60K 6/42, B60K 6/24, B60K 6/26

(54) **POWER TRAIN SYSTEM AND VEHICLE HAVING SAME**

(30) Priority: 31.10.2016 CN 201610933021
(71) Applicant: BYD Company Limited, Shenzhen, Guangdong 518118 (CN)
(72) Inventor: LIAN, Yubo, Shenzhen Guangdong 518118 (CN); LING, Heping, Shenzhen Guangdong 518118 (CN); ZHAI, Zhen, Shenzhen Guangdong 518118 (CN); XU, Youbin, Shenzhen Guangdong 518118 (CN); HUANG, Wei, Shenzhen Guangdong 518118 (CN)
(74) Representative: m patent group
(86) International application number: PCT/CN2017/108358
(87) International publication number: WO 2018/077265

(57) **Abstract**

The present invention discloses a power transmission system and a vehicle having same. The power transmission system includes: a power source; a speed change unit; a first motor generator, where the first motor generator is power-coupled to the speed change unit; a speed change unit output portion, where the speed change unit output portion is constructed to be suitable for outputting power output through the speed change unit; a system power output portion; a mode conversion device, where the speed change unit output portion is power-coupled to or power-decoupled from the system power output portion through the mode conversion device, and the speed change unit output portion is power-coupled to the system power output portion through the mode conversion device, so that the mode conversion device is suitable for decelerating the power received from the speed change unit output portion and then outputting the decelerated power to the system power output portion; and a power switching device, where the speed change unit is power-coupled to or power-decoupled from the speed change unit output portion through the power switching device. In this way, driving modes of the vehicle may be enriched, and the vehicle can adapt to different road conditions.

## Description

### FIELD

The present invention relates to the field of vehicle technologies, and in particular, to a power transmission system for a vehicle and a vehicle having the power transmission system.

### BACKGROUND

With continuous consumption of energy sources, development and use of new energy vehicle models have gradually become a trend. A hybrid power automobile as one of new energy vehicle models is driven through an engine and/or a motor, has a plurality of modes, and may improve transmission efficiency and fuel economy.

However, in related technologies understood by the inventor, some hybrid power automobiles have a small quantity of driving modes and relatively low driving transmission efficiency, and therefore cannot satisfy a requirement of adaptability of vehicles to various road conditions. Particularly, after a hybrid power automobile is fed (when a power level of a battery is insufficient), the power performance and the passing-through capability of the entire vehicle are insufficient. Moreover, to implement a stationary power generation working condition, a transmission mechanism needs to be additionally added. As a result, the integration level is low, and the power generation efficiency is low.

### SUMMARY

An objective of the present invention is to at least resolve one of the technical problems in the related art to some extent. In view of this, the present invention provides a power transmission system for a vehicle. The power transmission system has a large quantity of driving modes, and can effectively adjust power output to wheels, thereby enabling the vehicle to adapt to various road conditions.

The present invention further provides a vehicle.

The power transmission system for a vehicle according to the present invention includes: a power source; a speed change unit, where the speed change unit is suitable for being selectively power-coupled to the power source; a first motor generator, where the first motor generator is power-coupled to the speed change unit; a speed change unit output portion, where the speed change unit output portion is constructed to be suitable for outputting power output through the speed change unit; a system power output portion; a mode conversion device, where the speed change unit output portion is power-coupled to or power-decoupled from the system power output portion through the mode conversion device, and the speed change unit output portion is power-coupled to the system power output portion through the mode conversion device, so that the mode conversion device is suitable for decelerating the power received from the speed change unit output portion and then outputting the decelerated power to the system power output portion; and a power switching device, where the speed change unit is power-coupled to or power-decoupled from the speed change unit output portion through the power switching device.

Based on the power transmission system for a vehicle according to the present invention, by adjusting a status of the mode conversion device, driving modes of the vehicle can be enriched, and economy and power performance of the vehicle can be improved. Moreover, the vehicle can adapt to different road conditions, the passing-through performance and the de-trapping capability of the vehicle can be notably improved, and driving experience of a driver can be improved. Moreover, a stationary power generation function may be implemented through the mode conversion device. It is ensured that when the first motor generator performs driving and feedback, power is transmitted directly, and transmission efficiency is high, and it is also ensured that switching of stationary power generation modes is simple and reliable.

The vehicle according to the present invention includes the foregoing power transmission system.

### BRIEF DESCRIPTION OF THE DRAWINGS

FIG. 1 to FIG. 6 are schematic diagrams of a power transmission system for a vehicle according to an embodiment of the present invention;
FIG. 7 to FIG. 20 are schematic structural diagrams of a mode conversion device according to an embodiment of the present invention;
FIG. 21 to FIG. 26 are schematic diagrams of a mode conversion device, a system power output portion and a power switching on/off device;
FIG. 27 to FIG. 32 are schematic diagrams of an electric driving system;
FIG. 33 to FIG. 38 are schematic structural diagrams of a power transmission system for a vehicle according to an embodiment of the present invention; and
FIG. 39 to FIG. 45 are schematic structural diagrams of a power transmission system according to an embodiment of the present invention.

### DETAILED DESCRIPTION

The following describes embodiments of the present invention in detail. Examples of the embodiments are shown in the accompanying drawings. The following embodiments described with reference to the accompanying drawings are exemplary, and are intended to describe the present invention and cannot be construed as a limitation to the present invention.

A plurality of systems, for example, a power transmission system 1000 can be arranged on a hybrid power vehicle. The power transmission system 1000 may be configured to drive front wheels or rear wheels of the vehicle. Detailed description is made below through an example in which the power transmission system 1000 drives the front wheels of the vehicle. Certainly, the power transmission system 1000 may further drive the rear wheels of the vehicle to rotate in combination with another driving system, so that the vehicle is a four-wheel drive vehicle.

A power transmission system 1000 according to an embodiment of the present invention is described in detail below with reference to accompanying drawings.

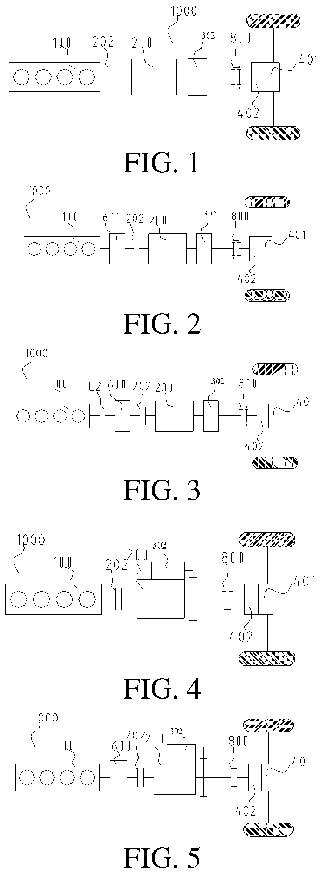

As shown in FIG. 1 to FIG. 6, the power transmission system 1000 may include: a power source 100, a speed change unit 200, a first motor generator 302, a speed change unit output portion 201, a speed change unit output portion 201, a mode conversion device 402 and a power switching device 800. Certainly, the power transmission system 1000 may further include other mechanical components, for example, a second motor generator 600, a first clutch device 202 and a second clutch device L2.

The speed change unit 200 is suitable for being selectively power-coupled to the power source 100, and the speed change unit output portion 201 is constructed to be suitable for outputting power output through the speed change unit 200. The speed change unit 200 is power-coupled to or power-decoupled from the speed change unit output portion 201 through the power switching device 800. It may be understood that, the power source 100 may selectively output power to the speed change unit 200, and power switching on/off between the speed change unit 200 and the speed change unit output portion 201 is controlled by the power switching device 800. For example, when the power switching device 800 power-couples the speed change unit 200 to the speed change unit output portion 201, the speed change unit may output power through the speed change unit output portion 201.

The first motor generator 302 is power-coupled to the speed change unit 200. To be specific, when the first motor generator 302 is used as a generator, the speed change unit 200 may output power to the first motor generator 302, and when the first motor generator 302 is used as an electric motor, the first motor generator 302 may output power to the speed change unit 200.

The speed change unit output portion 201 is power-coupled to or power-decoupled from a system power output portion 401 through the mode conversion device 402. To be specific, the mode conversion device 402 may control a power switching on/off status between the speed change unit 201 and the system power output portion. The speed change unit output portion 201 is power-coupled to the system power output portion 401 through the mode conversion device 402, so that the mode conversion device 402 is suitable for decelerating power received from the speed change unit output portion 201 and then outputting the decelerated power to the system power output portion 401. It may be understood that, in a power transmission process, the mode conversion device 402 may play a role of speed reduction and torque increase, so that the passing-through performance of the vehicle is relatively good. The power received by the speed change unit output portion 201 may be power transferred the power source 100 and/or the first motor generator 302.

When the speed change unit 200 is disconnected from the speed change unit output portion 201 through the power switching device 800, the power output by the power source 100 cannot be directly transferred to the system power output portion 401, and the power output by the power source 100 is suitable for directly driving the first motor generator 302 through the speed change unit 200 to perform power generation. In this case, the first motor generator 302 is used as a generator. In this way, the power transfer path between the power source 100 and the first motor generator 302 is relatively short, and transmission efficiency is high, thereby improving power generation efficiency of the first motor generator 302, and prolonging the travelling mileage of the vehicle.

When the speed change unit output portion 201 is power-coupled to the system power output portion 401 through the mode conversion device 402, the mode conversion device 402 is further suitable for outputting, to the system power output portion 401 at an original speed, power received from the speed change unit output portion 201. To be specific, the mode conversion device 402 not only has a deceleration function, but also has a function of original-speed transfer. In this way, the mode conversion device 402 may selectively output power to the system power output portion 401 at an original speed or decelerate power and output the decelerated power to the system power output portion, thereby enriching driving modes of the vehicle, and improving the passing-through performance of the vehicle.

The mode conversion device 402 includes a conversion device input portion 4020 and a conversion device output portion 4022, the conversion device input portion 4020 is power-coupled to the speed change unit output portion 201, the conversion device output portion 4022 is connected to an input end 4011 of the system power output portion 401, and the conversion device input portion 4020 is selectively power-coupled to the conversion device output portion 4022. The conversion device input portion 4020 is set to be selectively power-coupled to the conversion device output portion 4022, so that the mode conversion device 402 may control a power switching on/off status between the system power output portion 401 and the speed change unit output portion 201, thereby helping the mode conversion device 402 perform switching between an original speed and a reduced speed, and ensuring work reliability of the mode conversion device 402.

When the conversion device input portion 4020 is power-coupled to the conversion device output portion 4022, the rotational speed of the conversion device input portion 4020 is greater than or equal to the rotational speed of the conversion device output portion 4022. It may be understood that, when the rotational speed of the conversion device input portion 4020 is greater than the rotational speed of the conversion device output portion 4022, the mode conversion device 402 is performing deceleration transfer; when the rotational speed of the conversion device input portion 4020 is equal to the rotational speed of the conversion device output portion 4022, the mode conversion device 402 is performing original-speed transfer.

To be specific, when power transmission is performed between the conversion device input portion 4020 and the conversion device output portion 4022, there are two transmission modes. One transmission mode is a direct transfer mode, that is, the rotational speed of the conversion device input portion 4020 is equal to the rotational speed of the conversion device output portion 4022. The other transmission mode is a deceleration transfer mode, that is, the rotational speed of the conversion device input portion 4020 is greater than the rotational speed of the conversion device output portion 4022. In this way, the mode conversion device 402 increases a quantity of gears of the entire vehicle, the maximum output torque of the entire vehicle may be amplified by N times, and the power performance and the passing-through capability (for example, the maximum gradeability or the de-trapping capability) are improved. Particularly, for a conventional hybrid power vehicle model, because a battery pack, a motor, and an electric control system are added, the mass of the entire vehicle is large. Only power output of an engine may be relied on after feeding. In this case, the passing-through capability and the power performance deteriorate greatly. However, a hybrid power vehicle model for which the mode conversion device 402 in the present invention is used may effectively improve the power performance and the passing-through capability. Moreover, the two transmission modes may obviously enrich driving modes of the vehicle, so that the vehicle adapts to more different working conditions.

The foregoing N is equal to a speed ratio of an L gear to a D gear. When the vehicle is in the L gear, power transmission is performed between the conversion device input portion 4020 and the conversion device output portion 4022 in the direct transfer mode, and the rotational speed of the conversion device input portion 4020 is greater than the rotational speed of the conversion device output portion 4022. When the vehicle is in the D gear, power transmission is performed between the conversion device input portion 4020 and the conversion device output portion 4022 in the deceleration transfer mode, and the rotational speed of the conversion device input portion 4020 is equal to the rotational speed of the conversion device output portion 4022.

The mode conversion device 402 may facilitate intervention of the first motor generator 302 when the power source 100 is working, and the power source 100 and the first motor generator 302 connected in parallel may make, through direct torque coupling, advantages of strong power performance of the parallel-connected structure, a simple structure and easy space arrangement of the entire vehicle more outstanding.

Under a pure electric working condition, the first motor generator 302 has quite high transmission efficiency. The speed change unit 200 transfers power to the wheels through the speed change unit output portion 201 and the mode conversion device 402, and in this case, the vehicle is under a pure fuel working condition. For another example, the speed change unit 200 transfers power to the first motor generator 302 through the speed change unit output portion 201, and in this case, the vehicle is under a stationary power generation working condition. For still another example, the first motor generator 302 transfers power to the wheels through the speed change unit output portion 201 and the mode conversion device 402, and in this case, the vehicle is under a pure electric working condition. Additionally, such a way may further avoid a problem that a pure electric working condition needs to be implemented through a complex gear change during a speed change and a transmission chain in a usually hybrid power transmission system, and is particularly applicable to a plug-in hybrid power vehicle. Certainly, the speed change unit 200 and the first motor generator 302 may alternatively work at the same time.

Moreover, the mode conversion device 402 can further implement ultra-low speed gear output of the power transmission system 1000. That is, in an embodiment in which there is the speed change unit 200, the power from at least one of the power source 100 and the first motor generator 302 is first decelerated through the speed change unit 200, and then decelerated through the L gear, and ultra-low speed gear output of the power transmission system 1000 may be implemented. Therefore, torque output of the engine and the first motor generator 302 may be amplified to a great extent.

On control logic, the power transmission system 1000 provided in the present invention does not change the basic architecture and the gear change logic of the double clutch speed change, and intervention of the first motor generator 302 is only represented in torque superposition at the speed change unit output portion. Therefore, the control logic of the power source 100 and the speed change unit 200 is independent of the control logic of the first motor generator 302, the power output of the engine and the power output of the first motor generator 302 are relatively independent, and each output control logic of the power source is simple and easy to implement. Moreover, such a way facilitates saving of development time and costs of a manufacturer, and avoidance of a relatively high fault rate of the system. Even if the engine and the speed change unit 200 have a system fault, the power output of the first motor generator 302 under the pure electric working condition is not affected.

When the conversion device input portion 4020 is disconnected from the conversion device output portion 4022, and the speed change unit 200 is disconnected from the speed change unit output portion 201 through the power switching device 800, power output by the power source 100 is suitable for directly driving the first motor generator 302 through the speed change unit 200 to perform power generation. In this case, the power of the power source 100 cannot be transferred to the system power output portion 401, but is directly transferred to the first motor generator 302 for power generation.

To be specific, when the vehicle is under the parking working condition, the power of the power source 100 may be transferred to the first motor generator 302 for the first motor generator 302 to perform power generation, thereby implementing stationary power generation. Such stationary power generation does not need to add an additional power transmission chain, and switching between stationary power generation modes may be implemented through only the mode conversion device 402, so that switching control is simple, and transmission efficiency is high. The first motor generator 302 is set to directly connect to the mode conversion device 402, power output of the first motor generator 302 is direct and efficient, and braking energy feedback efficiency is high.

Further, the speed change unit 200 only needs to implement a speed change and a torque change in the power of the engine. In this way, the speed change unit 200 does not need an additional design change, so as to facilitate miniaturization of the speed change unit 200, thereby reducing the development costs of the entire vehicle and shortening the development period.

Moreover, the foregoing these advantages are all implemented through the mode conversion device 402, and therefore the power transmission system 1000 has a quite high integration level.

The speed change unit output portion 201 is power-coupled to the mode conversion device 402, and the speed change unit 200 is power-coupled to the speed change unit output portion 201 through the power switching device 800, so that power output by at least one of the power source 100 and the first motor generator 302 is output to the mode conversion device 402 sequentially through the speed change unit 200 and the speed change unit output portion 201. In this way, the power source 100 may independently output power to the speed change unit 200, and the first motor generator 302 may also independently output power to the speed change unit 200; and the power source 100 and the first motor generator 302 may jointly output power to the speed change unit 200 and the power is coupled and then output.

A plurality of arrangement forms of the mode conversion device 402 is described in detail below with reference to a plurality of accompanying drawings.

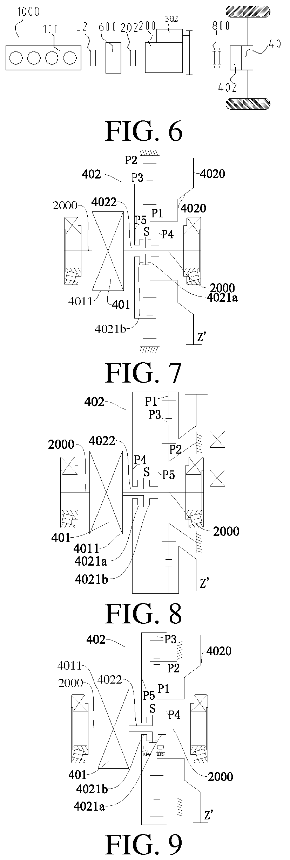

According to a first embodiment of the present invention, as shown in FIG. 7 to FIG. 19, the mode conversion device 402 may further include a first conversion portion 4021a and a second conversion portion 4021b, the conversion device output portion 4022 is selectively connected to one of the first conversion portion 4021a and the second conversion portion 4021b, the conversion device input portion 4020 is fixedly connected to the first conversion portion 4021a, and the conversion device output portion 4022 is connected to the second conversion portion 4021b, so that the rotational speed output by the conversion device input portion 4020 is reduced and then output to the input end 4011 of the differential 401.

In this way, when the conversion device output portion 4022 is connected to the first conversion portion 4021a, the rotational speed output by the conversion device input portion 4020 is suitably made the same as the rotational speed of the input end 4011 of the system power output portion 401.

Therefore, it may be understood that, after the power generated by the power source 100 and/or the first motor generator 302 is transferred to the conversion device input portion 4020, the conversion device input portion 4020 may transfer the power to the first conversion portion 4021a and the second conversion portion 4021b, and by properly selecting the first conversion portion 4021a and the second conversion portion 4021b, the conversion device output portion 4022 may control the rotational speed transferred to the wheels, and then may control the speed of the vehicle, so that the speed of the vehicle is more suitable for the current vehicle condition, and travelling stability and power performance of the vehicle may be improved.

According to a first preferred embodiment of the present invention, as shown in FIG. 7 to FIG. 18, the mode conversion device 402 may include: a main reducer driven gear Z', a planet gear mechanism P and a conversion device connector S, where the main reducer driven gear Z' is the conversion device input portion 4020, the planet gear mechanism P may include a first element P1, a second element P2 and a third element P3, and the first element P1 is fixed to the main reducer driven gear Z'. In this way, power may be transferred between the first element P1 and the main reducer driven gear Z', the second element P2 is fixedly disposed, the first element P1 is the first conversion portion 4021a, and the third element P3 is the second conversion portion 4021b. To be specific, the first element P1 may perform transmission with the third element P3, and in this transmission process, the rotational speed of the first element P1 is greater than the rotational speed of the third element P3. Moreover, the planet gear mechanism P may include: a sun gear, a planet gear, a planet carrier and a gear ring, the planet gear is installed on the planet carrier, and the planet gear is meshed between the sun gear and the gear ring. In this way, each of the sun gear, the planet carrier and the gear ring may be one of the first element P1, the second element P2 and the third element P3.

As shown in FIG. 7, the first element P1 is the sun gear, the sun gear is directly fixedly connected to the main reducer driven gear Z', the second element P2 is the gear ring, and the third element P3 is the planet carrier.

As shown in FIG. 8, the first element P1 is the gear ring, the gear ring is directly fixedly connected to the main reducer driven gear Z', the second element P2 is the sun gear, and the third element P3 is the planet carrier.

As shown in FIG. 9, the first element P1 is the sun gear, the sun gear is directly fixedly connected to the main reducer driven gear Z', the second element P2 is the planet carrier, and the third element P3 is the gear ring.

Further, the mode conversion device 402 may further include: a conversion device connector S, and the conversion device output portion 4022 is selectively connected to one of the first element P1 and the third element P3 through the conversion device connector S. Preferably, the conversion connection device may be a conversion device synchronizer. In this way, the conversion device synchronizer may selectively connect the conversion device output portion 4022 to the first element P1 and the third element P3. When the conversion device synchronizer is connected to the first element P1, the rotational speed of the conversion device input portion 4020 is the same as the rotational speed of the conversion device output portion 4022. When the conversion device synchronizer is connected to the third element P3, the rotational speed of the conversion device input portion 4020 is greater than the rotational speed of the conversion device output portion 4022.

There is a plurality of arrangement forms of the conversion device connector S, and detailed description is made below with reference to accompanying drawings.

According to a first specific embodiment of the present invention, as shown in FIG. 7 to FIG. 9, in the axial direction of the central axis of the planet gear mechanism P, the conversion device connector S is located between the first element P1 and the third element P3. In this way, one conversion device synchronizer may be saved, so that the mode conversion device 402 is simple in structure and is simple in control logic.

The conversion device output portion 4022 may be a shaft sleeve, the shaft sleeve may be sleeved on a half shaft 2000, one end of the shaft sleeve is fixedly connected to the input end 4011 of the system power output portion 401, and the conversion device connector S is fixedly disposed on the other end of the shaft sleeve. In this way the conversion device output portion 4022 may output power to the system power output portion 401 in time and reliably.

Specifically, each of that element that is of the first element P1 and the third element P3 and that is closer to the input end 4011 of the system power output portion 401, and the main reducer driven gear Z' is freely sleeved on the shaft sleeve, the shaft sleeve is sleeved on the half shaft 2000 of the vehicle, and that element that is of the first element P1 and the third element P3 and that is farther away from the input end 4011 of the system power output portion 401 is freely sleeved on the half shaft 2000 of the vehicle.

As shown in FIG. 7, the third element P3 is closer to the system power output portion 401, and the third element P3 is freely sleeved on the shaft sleeve. As shown in FIG. 8, the first element P1 is closer to the system power output portion 401, and the first element P1 is freely sleeved on the shaft sleeve. As shown in FIG. 9, the third element P3 is closer to the system power output portion 401, and the third element P3 is freely sleeved on the shaft sleeve. In this way, the mode conversion device 402 is compact in structure and proper in arrangement.

The planet gear mechanism P further includes a first element connection portion P4 and a third element connection portion P5, the first element connection portion P4 is fixedly connected to the first element P1, and the first element connection portion P4 is suitable for being selectively connected to the conversion device connector S. The third element connection portion P5 is fixedly connected to the third element P3, and the third element connection portion P5 is suitable for being selectively connected to the conversion device connector S. In the axial direction of the central axis of the planet gear mechanism P, the conversion device connector S is located in space defined by the first element connection portion P4 and the third element connection portion P5. The first element connection portion P4 may facilitate connection or disconnection between the first element P1 and the conversion device synchronizer, and the third element connection portion P5 may facilitate connection or disconnection between the third element P3 and the conversion device connector S. Moreover, the conversion device connector S is located between the first element connection portion P4 and the third element connection portion P5.

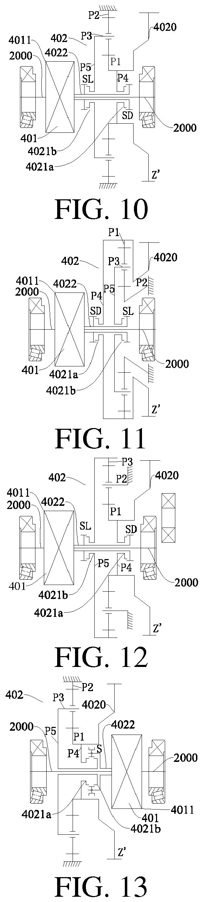

A main difference between a second specific embodiment of the present invention and the foregoing first specific embodiment is that, as shown in FIG. 10 to FIG. 12, the conversion device connector S may include a first connection portion and a second connection portion spaced apart from each other, the first connection portion is suitable for selectively connecting the conversion device output portion 4022 to the first element P1, and the second connection portion is suitable for selectively connecting the conversion device output portion 4022 to the third element P3. To be specific, when the first connection portion connects the conversion device output portion 4022 to the first element P1, the rotational speed of the conversion device input portion 4020 is the same as the rotational speed of the conversion device output portion 4022; when the second connection portion connects the conversion device output portion 4022 to the third element P3, the rotational speed of the conversion device input portion 4020 is greater than the rotational speed of the conversion device output portion 4022. In this way, the first connection portion and the second connection portion are separately arranged, so that the conversion device connector S is simple in arrangement, and cooperation between a shifting yoke mechanism and the first connection portion and the second connection portion may be facilitated.

Further, as shown in FIG. 10 to FIG. 12, the conversion device output portion 4022 may be a shaft sleeve, one end of the shaft sleeve is fixedly connected to the input end 4011 of the system power output portion 401, the other end of the shaft sleeve passes through the planet gear structure, one of the first connection portion and the second connection portion is fixedly disposed on the other end of the shaft sleeve, and the other of the first connection portion and the second connection portion is fixedly disposed on a part of the shaft sleeve not passing through the planet gear mechanism P. It should be noted that, arrangement locations of the first connection portion and the second connection portion are adjusted according to the first element P1 and the third element P3, and when the first element P1 is farther away from the system power output portion 401 relative to the third element P3, the first connection portion is fixed on the other end of the shaft sleeve, and the second connection portion is fixedly disposed on a part of the shaft sleeve not passing through the planet gear mechanism P. When the first element P1 is closer to the system power output portion 401 relative to the third element P3, the second connection portion is fixed on the other end of the shaft sleeve, and the first connection portion is fixedly disposed on a part of the shaft sleeve not passing through the planet gear mechanism P.

Specifically, as shown in FIG. 10 to FIG. 12, The planet gear mechanism P may further include a first element connection portion P4 and a third element connection portion P5, the first element connection portion P4 is fixedly connected to the first element P1, and the first element connection portion P4 is suitable for being selectively connected to the conversion device connector S. The third element connection portion P5 is fixedly connected to the third element P3, and the third element connection portion P5 is suitable for being selectively connected to the conversion device connector S. In the axial direction of the central axis of the planet gear mechanism P, each of the first element connection portion P4 and the third element connection portion P5 is located between the first connection portion and the second connection portion. Such an aspect may help the conversion device connector S control connection between the first element P1 and the conversion device output portion 4022, and may help control connection between the third element P3 and the conversion device output portion 4022, so that the mode conversion device 402 is simple in structure, proper in deployment, and simple in control logic.

Optionally, as shown in FIG. 10 to FIG. 12, each of the first element P1, the third element P3, and the main reducer driven gear Z' may be freely sleeved on the shaft sleeve, and the shaft sleeve is sleeved on the half shaft 2000 of the vehicle. The shaft sleeve may rotate relative to the half shaft 2000, and the first element P1, the third element P3, and the main reducer driven gear Z' may rotate relative to the shaft sleeve. In this way, space on the half shaft 2000 may be properly used, arrangement reliability of the shaft sleeve, the first element P1, the third element P3, and the main reducer driven gear Z' may be ensured, and arrangement difficulty of the power transmission system 1000 may be further reduced.

The conversion device connector S may include a direct-gear synchronizer SD and a low-gear synchronizer SL, the first connection portion is a part of the direct-gear synchronizer SD, and the second connection portion is a part of the low-gear synchronizer SL. Connection between the first element connection portion P4 and the conversion device output portion 4022 through the direct-gear synchronizer SD may ensure that the rotational speed of the conversion device input portion 4020 is the same as the rotational speed of the conversion device output portion 4022, and connection between the third element connection portion P5 and the conversion device output portion 4022 through the low-gear synchronizer SL may ensure that the rotational speed of the conversion device input portion 4020 is greater than the rotational speed of the conversion device output portion 4022.

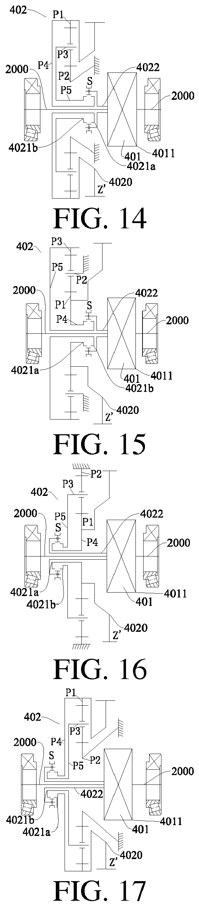

A third specific embodiment of the present invention is roughly the same as the first specific embodiment. For a specific difference, refer to the following content. As shown in FIG. 13 to FIG. 18, in the axial direction of the central axis of the planet gear mechanism P, the conversion device connector S is located on a side of the planet gear mechanism P. Specifically, as shown in FIG. 13 to FIG. 15, in the axial direction of the central axis of the planet gear mechanism P, the conversion device connector S is located on a right side of the planet gear mechanism P. As shown in FIG. 16 to FIG. 18, in the axial direction of the central axis of the planet gear mechanism P, the conversion device connector S is located on a left side of the planet gear mechanism P. In this way, in the axial direction, the planet gear mechanism P and the conversion device connector S are spaced apart from each other, thereby facilitating arrangement of the shifting yoke mechanism, reducing arrangement difficulty of the shifting yoke mechanism, and further improving arrangement convenience and control convenience of the power transmission system 1000.

Optionally, as shown in FIG. 13 to FIG. 15, the conversion device connector S is disposed on the conversion device output portion 4022, and each of the conversion device output portion 4022 and the conversion device connector S is located on a side of the planet gear mechanism P. To be specific, the conversion device output portion 4022 and the conversion device connector S may be located on a same side of the planet gear mechanism P, for example, a right side. In this way, axial arrangement of the planet gear mechanism P, the conversion device connector S and the conversion device output portion 4022 is made proper, thereby facilitating arrangement of the shifting yoke mechanism, and improving structure reliability of the mode conversion device 402.

As shown in FIG. 13 to FIG. 15, in the axial direction of the central axis of the planet gear mechanism P, from one end away from the conversion device connector S to one end close to the conversion device connector S, a connection disk part corresponding to that element that is of the first element P1 and the third element P3 and that is located on an outer side, and a connection disk part corresponding to that element that is of the first element P1 and the third element P3 and that is located on an inner side are sequentially disposed. In the radial direction of the central axis of the planet gear mechanism P, a sleeve part corresponding to that element that is of the first element P1 and the third element P3 and that is located on an inner side, and a sleeve part corresponding to that element that is of the first element P1 and the third element P3 and that is located on an outer side are sequentially sleeved from outside to inside.

Exemplary description is made below through the power transmission system 1000 shown in FIG. 13 as an example.

As shown in FIG. 13, in the axial direction of the central axis of the planet gear mechanism P, from one end away from the conversion device connector S to one end close to the conversion device connector S, the connection disk part of the third element P3 and the connection disk part of the first element P1 are sequentially arranged. In the radial direction of the central axis of the planet gear mechanism P, a sleeve part corresponding to the first element P1 and a sleeve part corresponding to the third element P3 are sequentially sleeved from outside to inside. In this way, the first element connection portion P4 and the third element connection portion P5 are arranged properly in each of the axial direction and the radial direction, so that the mode conversion device 402 is arranged properly.

Additionally, optionally, as shown in FIG. 16 to FIG. 18, one part of the conversion device output portion 4022 may pass through the planet gear mechanism P, and the conversion device connector S is disposed on the foregoing one part of the conversion device output portion 4022. To be specific, the conversion device connector S and the system power output portion 401 are respectively located on two sides of the planet gear mechanism P, and the planet gear mechanism P may be sleeved on the conversion device output portion 4022, so that axial space and radial space of the mode conversion device 402 may be properly used. Specifically, the conversion device output portion 4022 may be a shaft sleeve, and the shaft sleeve is sleeved on the half shaft 2000 of the vehicle.

As shown in FIG. 16 to FIG. 18, the planet gear mechanism P may further include a first element connection portion P4 and a third element connection portion P5, the first element connection portion P4 is fixedly connected to the first element P1, and the first element connection portion P4 is suitable for being selectively connected to the conversion device connector S. The third element connection portion P5 is fixedly connected to the third element P3, and the third element connection portion P5 is suitable for being selectively connected to the conversion device connector S. Disposition of the first element connection portion P4 and the third element connection portion P5 may help the conversion device output portion 4022 selectively connect to each of the first element P1 and the third element P3.

Optionally, as shown in FIG. 16 to FIG. 18, each of the first element connection portion P4 and the third element connection portion P5 may include a connection disk part and a sleeve part, the connection disk part is perpendicular to the central axis of the planet gear mechanism P, and the sleeve part is parallel to the central axis of the planet gear mechanism P. The outer edge of the connection disk part is fixedly connected to a corresponding element, the inner edge of the connection disk part is connected to one end of the sleeve part, and the other end of the sleeve part is suitable for selectively connecting to the conversion device connector S. In this way, disposition of the connection disk part and the sleeve part may ensure reliability of connection or disconnection between the first element P1 and the conversion device connector S, and may ensure reliability of connection or disconnection between the third element P3 and the conversion device connector S.

As shown in FIG. 16 to FIG. 18, in the axial direction of the central axis of the planet gear mechanism P, from one end away from the conversion device connector S to one end close to the conversion device connector S, a connection disk part corresponding to that element that is of the first element P1 and the third element P3 and that is located on an inner side, and a connection disk part corresponding to that element that is of the first element P1 and the third element P3 and that is located on an outer side are sequentially disposed. In the radial direction of the central axis of the planet gear mechanism P, a sleeve part corresponding to that element that is of the first element P1 and the third element P3 and that is located on an outer side, and a sleeve part corresponding to that element that is of the first element P1 and the third element P3 and that is located on an inner side are sequentially sleeved from outside to inside.

The arrangement form of the corresponding conversion device output portion 4022 is described below in detail. As shown in FIG. 13 to FIG. 15, the conversion device output portion 4022 may be a shaft sleeve, one end of the shaft sleeve is fixed to the input end 4011 of the system power output portion 401, the conversion device connector S is disposed on the other end of the shaft sleeve, and the shaft sleeve is located on a side of the planet gear mechanism P.

Alternatively, as shown in FIG. 16 to FIG. 18, the conversion device output portion 4022 may be a shaft sleeve, one end of the shaft sleeve is fixed to the input end 4011 of the system power output portion 401, the conversion device connector S is disposed on the other end of the shaft sleeve, and the other end of the shaft sleeve passes through the planet gear mechanism P.

Exemplary description is made below through the power transmission system 1000 shown in FIG. 16 as an example.

As shown in FIG. 16, in the axial direction of the central axis of the planet gear mechanism P, from one end away from the conversion device connector S to one end close to the conversion device connector S, a connection disk part corresponding to the third element P3 and a connection disk part corresponding to the first element P1 are sequentially disposed, and in the radial direction of the central axis of the planet gear mechanism P, a sleeve part corresponding to the third element P3 and a sleeve part corresponding to the first element P1 are sequentially sleeved from outside to inside.

As shown in FIG. 13 to FIG. 18, each conversion device connector S may be a conversion device synchronizer.

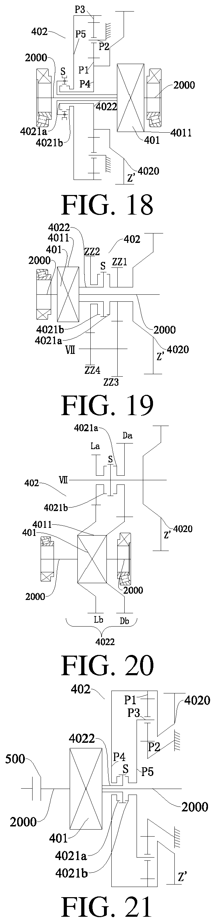

According to a second embodiment of the present invention, as shown in FIG. 19, the mode conversion device 402 may further include a first conversion portion 4021a and a second conversion portion 4021b, the conversion device output portion 4022 is selectively connected to one of the first conversion portion 4021a and the second conversion portion 4021b, the conversion device input portion 4020 is fixedly connected to the first conversion portion 4021a, and the conversion device output portion 4022 is connected to the second conversion portion 4021b, so that the rotational speed of the conversion device output portion 4022 is reduced sequentially through the first conversion portion 4021a and the second conversion portion 4021b and then output to the input end 4011 of the system power output portion 401.

In this way, when the conversion device output portion 4022 is connected to the first conversion portion 4021a, the rotational speed output by the conversion device input portion 4020 is suitably made the same as the rotational speed of the input end 4011 of the system power output portion 401.

Therefore, it may be understood that, after the power generated by the power source 100 and/or the first motor generator 302 is transferred to the conversion device input portion 4020, the conversion device input portion 4020 may transfer the power to the first conversion portion 4021a and the second conversion portion 4021b, and by properly selecting the first conversion portion 4021a and the second conversion portion 4021b, the conversion device output portion 4022 may control the rotational speed transferred to the wheels, and then may control the speed of the vehicle, so that the speed of the vehicle is more suitable for the current vehicle condition, and travelling stability and power performance of the vehicle may be improved.

As shown in FIG. 19, in the mode conversion device 402, the conversion device input portion 4020 is a main reducer driven gear Z', the first conversion portion 4021a is a first conversion gear ZZ1, and the second conversion portion 4021b is a second conversion gear ZZ2, but the mode conversion device 402 further includes: a conversion device shaft . Each of the main reducer driven gear Z', the first conversion gear ZZ1 and the second conversion gear ZZ2 is freely sleeved on the half shaft 2000 of the vehicle, a third conversion gear ZZ3 and a fourth conversion gear ZZ4 are fixed on the conversion device shaft , the first conversion gear ZZ1 is meshed with the third conversion gear ZZ3, and the second conversion gear ZZ2 is meshed with the fourth conversion gear ZZ4. In this way, first-stage speed reduction is formed between the first conversion gear ZZ1 and the third conversion gear ZZ3, and second-stage speed reduction is formed between the second conversion gear ZZ2 and the fourth conversion gear ZZ4, so that the rotational speed of the first conversion gear ZZ1 is greater than the rotational speed of the second conversion gear ZZ2.

Specifically, as shown in FIG. 19, the main reducer driven gear Z' may form a duplicate gear structure with the first conversion gear ZZ1. In other words, one gear of the duplicate gear structure forms the main reducer driven gear Z' and the other gear forms the first conversion gear ZZ1. In this way, by disposing the duplicate gear structure, the mode conversion device 402 is simple in structure and reliable in work, and the power transmission system 1000 is simple in structure and reliable in work.

The conversion device output portion 4022 is suitable for being disconnected from each of the first conversion portion 4021a and the second conversion portion 4021b, so that the power source 100 is suitable for directly driving the first motor generator 302 through the speed change unit 200 to perform power generation. In this way, the power generation efficiency of the first motor generator 302 is high, and the energy loss may be effectively reduced.

Further, as shown in FIG. 19, The mode conversion device 402 may further include a conversion device connector S, and the conversion device output portion 4022 is selectively connected to the first conversion portion 4021a or the second conversion portion 4021b through the conversion device connector S. Herein, it may be understood that, the conversion device output portion 4022 may be selectively connected to and disconnected from the first conversion portion 4021a, and the conversion device output portion 4022 may be selectively connected to and disconnected from the second conversion portion 4021b. By switching a status and a connection target of the conversion device connector S, the output rotational speed transferred to the conversion device output portion 4022 may be changed, thereby changing the rotational speed of the wheels, further enriching driving modes of the vehicle, and improving economy and power performance of the vehicle. The conversion device connector S may be a conversion device synchronizer, and the conversion device synchronizer is disposed between the first conversion gear ZZ1 and the second conversion gear ZZ2, thereby reducing a quantity of synchronizers, so that the mode conversion device 402 is simple in structure and low in costs.

As shown in FIG. 19, the conversion device output portion 4022 may be a shaft sleeve, one end of the shaft sleeve is fixedly connected to the input end 4011 of the system power output portion 401, and the conversion device connector S is disposed on the other end of the shaft sleeve. In this way, reliability of synchronization between the conversion device output portion 4022 and the corresponding first conversion gear ZZ1 and second conversion gear ZZ2 may be ensured. Moreover, through proper radial sleeve arrangement, space of the mode conversion device 402 may be effectively saved, so that the mode conversion device 402 is compact in structure and small in volume, and occupies small space of the power transmission system 1000.

Each of that conversion portion that is of the first conversion portion 4021a and the second conversion portion 4021b and that is closer to the input end 4011 of the system power output portion 401, and the conversion device input portion 4020 is freely sleeved on the shaft sleeve, the shaft sleeve is sleeved on a half shaft 2000 of the vehicle, and that conversion portion that is of the first conversion portion 4021a and the second conversion portion 4021b and that is farther away from the input end of 4011 the system power output portion 401 is freely sleeved on the half shaft 2000 of the vehicle.

Further, the shaft sleeve may be sleeved on the half shaft 2000 of the vehicle, and the second conversion gear ZZ2 may be freely sleeved on the shaft sleeve. In this way, the arrangement location of the second conversion gear ZZ2 is proper, and structure reliability of the mode conversion device 402 may be ensured.

According to a third embodiment of the present invention, as shown in FIG. 20, the mode conversion device 402 may further include a first conversion portion 4021a and a second conversion portion 4021b, the conversion device output portion 4022 is connected to the input end 4011 of the system power output portion 401, the conversion device input portion 4020 is suitable for outputting power from at least one of the power source 100 and the first motor generator 302, the conversion device input portion 4020 is selectively connected to one of the first conversion portion 4021a and the second conversion portion 4021b, and each of the first conversion portion 4021a and the second conversion portion 4021b cooperates with the conversion device output portion 4022 to perform transmission. To be specific, during power transfer, the conversion device input portion 4020 may transfer power to the conversion device output portion 4022 through the first conversion portion 4021a or the second conversion portion 4021b.

The conversion device input portion 4020 is suitable for connecting to the first conversion portion 4021a, so that the rotational speed of the conversion device input portion 4020 is the same as the rotational speed of the input end 4011 of the system power output portion 401. The conversion device input portion 4020 is suitable for connecting to the second conversion portion 4021b, so that the rotational speed of the conversion device input portion 4020 is reduced and then output to the system power output portion 401.

Specifically, as shown in FIG. 20, the conversion device input portion 4020 is a main reducer driven gear Z', the mode conversion device 402 may further include: a conversion device shaft , the main reducer driven gear Z' is fixedly disposed on the conversion device shaft , a direct-gear driving gear Da and a low-gear driving gear La are freely sleeved on the conversion device shaft , and the conversion device shaft is parallel to the half shaft 2000 of the vehicle.

The direct-gear driving gear Da may be the first conversion portion 4021a, and the low-gear driving gear La may be the second conversion portion 4021b. The conversion device output portion 4022 may include a direct-gear driven gear Db and a low-gear driven gear Lb, the direct-gear driven gear Db is meshed with the direct-gear driving gear Da, the low-gear driven gear Lb is meshed with the low-gear driving gear La, and each of the direct-gear driven gear Db and the low-gear driven gear Lb is fixedly connected to the input end 4011 of the system power output portion 401. In this way, power transfer is reliable, and transmission efficiency is high.

Moreover, the conversion device input portion 4020 is suitable for being disconnected from each of the first conversion portion 4021a and the second conversion portion 4021b, so that the power source 100 is suitable for driving the first motor generator 302 sequentially through the speed change unit 200 and the conversion device input portion 4020 to perform power generation.

The mode conversion device 402 may further include a conversion device connector S, and the conversion device output portion 4022 is selectively connected to the first conversion portion 4021a or the second conversion portion 4021b through the conversion device connector S. Herein, it may be understood that, the conversion device output portion 4022 may be selectively connected to and disconnected from the first conversion portion 4021a, and the conversion device output portion 4022 may be selectively connected to and disconnected from the second conversion portion 4021b. By switching a status and a connection target of the conversion device connector S, the output rotational speed transferred to the conversion device output portion 4022 may be changed, thereby changing the rotational speed of the wheels, further enriching driving modes of the vehicle, and improving economy and power performance of the vehicle.

The conversion device connector S may be a conversion device synchronizer. Optionally, the conversion device synchronizer may be fixed on the conversion device shaft. Preferably, the conversion device synchronizer may be located between the direct-gear driving gear Da and the low-gear driving gear La. In this way, a quantity of synchronizers may be reduced, so that the mode conversion device 402 is simple in structure and low in costs.

The speed change unit output portion 201 may be a main reducer driving gear Z, and the main reducer driving gear Z is meshed with the main reducer driven gear Z'.

Moreover, the power transmission system 1000 may further include a speed reduction chain 303, and the first motor generator 302 is power-coupled to the speed change unit 200 through the speed reduction chain 303. The speed reduction chain 303 includes: a first speed reduction shaft 3031 and a second speed reduction shaft 3032, the first speed reduction shaft 3031 is fixedly connected to the first motor generator 302, a first gear Z1 is disposed on the first speed reduction shaft 3031, a second gear Z2 is disposed on the second speed reduction shaft 3032, the first gear Z1 is meshed with the second gear Z2, and the second speed reduction shaft 3032 may be a speed change power output portion of the speed change unit 200.

The power source 100 may be an engine, and the speed change unit 200 is suitable for being selectively coupled to the power source 100. As shown in FIG. 1 to FIG. 6, the power source 100 may be axially connected to the speed change unit 200, where the first clutch device 202 may be disposed between the power source 100 and the speed change unit 200, and the first clutch device 202 may control a state of connection or disconnection between the power source 100 and the speed change unit 200.

The speed change unit 200 may be a transmission. Certainly, the present invention is not limited thereto. The speed change unit 200 may be further another speed change mechanism, for example, a gear speed reduction transmission mechanism. Detailed description is made below through an example in which the speed change unit 200 is a transmission.

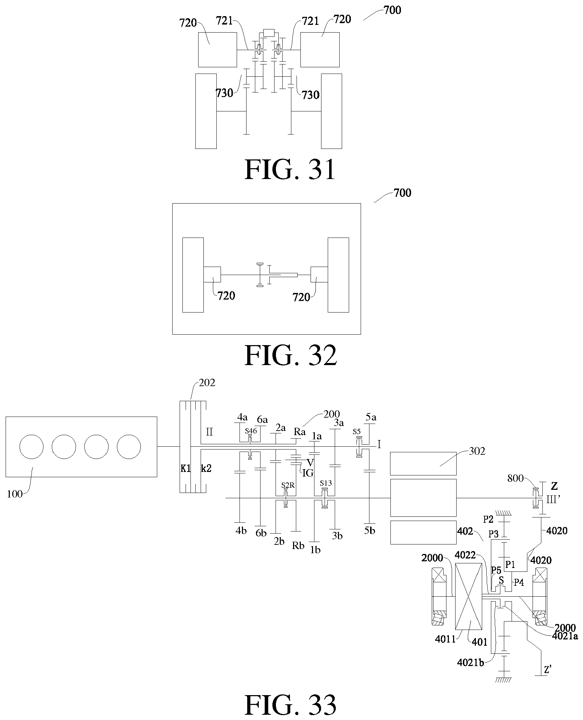

The speed change unit 200 may have a plurality of arrangement forms, and a change in each of an input shaft, an output shaft, and a gear may form a new speed change unit 200. Detailed description is made below through the speed change unit 200 in the power transmission system 1000 shown in FIG. 33 an example.

As shown in FIG. 33, the speed change unit 200 may include: a speed change power input portion and a speed change power output portion, and the speed change power input portion may be selectively connected to the power source 100, so as to transmit power generated by the power source 100. The first clutch device 202 may include an input end and an output end, the input end is connected to the power source 100, the output end is connected to the speed change power input portion, and when the input end is connected to the output end, the power source 100 is connected to the speed change power input portion to transfer power.

The speed change power output portion is power-coupled to or power-decoupled from the speed change unit output portion 201 through the power switching device 800, and when the speed change power output portion is power-coupled to the speed change unit output portion 201 through the power switching device 800, the speed change power output portion is constructed to be suitable for outputting the power from the speed change power input portion to the speed change unit output portion 201 through synchronization of a speed change unit synchronizer and through the power switching device 800.

The speed change power input portion includes at least one input shaft, each input shaft may be selectively connected to the power source 100, and at least one driving gear is disposed on each input shaft.

The speed change power output portion includes: at least one output shaft, at least one driven gear is disposed on each output shaft, the driven gear is meshed with the corresponding driving gear, the speed change unit output portion 201 is at least one main reducer driving gear Z, and the at least one main reducer driving gear Z is fixed on the at least one output shaft in a one-to-one correspondence.

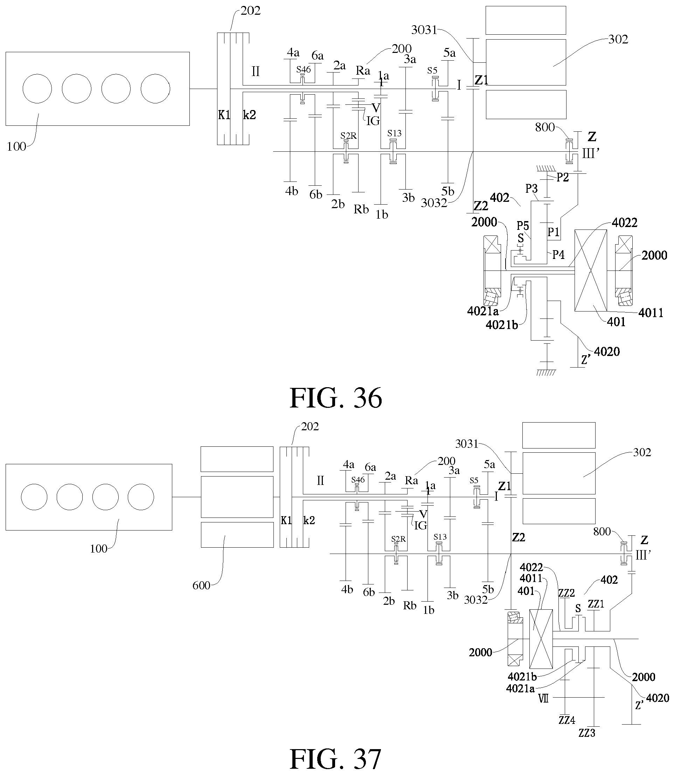

As shown in FIG. 33 to FIG. 38, the speed change unit 200 may be a six-gear speed change unit, the speed change power input portion may include: a first input shaft I and a second input shaft II, the second input shaft II is sleeved on the first input shaft I, the first clutch device 202 may be a double clutch, the double clutch has an input end, a first output end K1 and a second output end k2, and the input end may be selectively connected to at least one of the first output end K1 and the second output end k2. To be specific, the input end may be connected to the first output end K1, or the input end may be connected to the second output end k2, or the input end may be connected to both the first output end K1 and the second output end k2. The first output end K1 is connected to the first input shaft I, and the second output end k2 is connected to the second input shaft II.

At least one first driving gear is fixed on each of the first input shaft I and the second input shaft II, and at least one second driving gear is freely sleeved on each of the first input shaft I and the second input shaft II.

As shown in FIG. 33 to FIG. 35, the first-gear driving gear IRa and the third-gear driving gear 3a are fixedly disposed on the first input shaft I, the fifth-gear driving gear 5a is freely sleeved on the first input shaft I, the second-gear driving gear 2a is fixedly disposed on the second input shaft II, and the fourth-gear driving gear 4a and the sixth-gear driving gear 6a are freely sleeved on the second input shaft II, where a fourth-sixth-gear synchronizer S6R may be disposed between the fourth-gear driving gear 4a and the sixth-gear driving gear 6a. The second input shaft II is sleeved on the first input shaft I. In this way, the axial length of the power transmission system 1000 may be effectively shortened, thereby reducing space of the vehicle occupied by the power transmission system 1000.

There is one output shaft, that is, power output shaft. The reverse-gear driven gear Rb and at least one first driven gear are freely sleeved on the power output shaft, the at least one first driven gear is correspondingly meshed with the at least one first driving gear, at least one second driven gear is fixedly disposed on the power output shaft, the at least one second driven gear is correspondingly meshed with the at least one second driving gear, and the reverse-gear driven gear Rb and the at least one first driven gear are selectively connected to the power output shaft.

The first output shaft III' is fixedly provided with the fourth-gear driven gear 4b, the fifth-gear driven gear 5b, the sixth-gear driven gear 6b, and the first-gear driven gear 1b, the second-gear driven gear 2b, the third-gear driven gear 3b and the reverse-gear driven gear Rb are further sleeved on the first output shaft III', a first-third-gear synchronizer S13 is disposed between the first-gear driven gear 1b and the third-gear driven gear 3b, and a second-reverse-gear synchronizer S2R is disposed between the second-gear driven gear 2b and the reverse-gear driven gear Rb.

A reverse-gear driving gear Ra is further fixedly disposed on the second input shaft II, the reverse-gear driven gear Rb is freely sleeved on the first output shaft III', an idle gear IG is disposed between the reverse-gear driving gear Ra and the reverse-gear driven gear Rb, the idle gear IG is meshed between the reverse-gear driving gear Ra and the reverse-gear driven gear Rb, the idle gear IG is fixed on the reverse-gear intermediate shaft V, and the idle gear IG may ensure that the reverse-gear driving gear Ra and the reverse-gear driven gear Rb are linked in a same direction.

The system power output portion 401 may be a differential. As shown in FIG. 21 to FIG. 26, the differential 401 may include two half-shaft gears, and the two half-shaft gears and two half shafts 2000 of the vehicle are in a one-to-one correspondence. The power transmission system 1000 for the vehicle further includes: a power switching on/off device 500, and the power switching on/off device 500 is suitable for selectively connect at least one of the two half-shaft gears and a corresponding half shaft 2000 of the vehicle. It may be understood that, if a power switching on/off device 500 is disposed between a half shaft 2000 on one side and a corresponding half-shaft gear, the power switching on/off device 500 may control a state of connection or disconnection between the half shaft 2000 on the side and the half-shaft gear; or if a power switching on/off device 500 is disposed between each of half shafts 2000 on two sides and a corresponding half-shaft gear, each power switching on/off device 500 may control a state of connection or disconnection on a corresponding side. The power switching on/off device 500 may facilitate stationary power generation when the vehicle is under the parking working condition. In this way, when the vehicle is under the parking working condition, the first motor generator 302 is directly connected to the mode conversion device 402, power output of the first motor generator 302 is direct and efficient, and braking energy feedback efficiency is high.

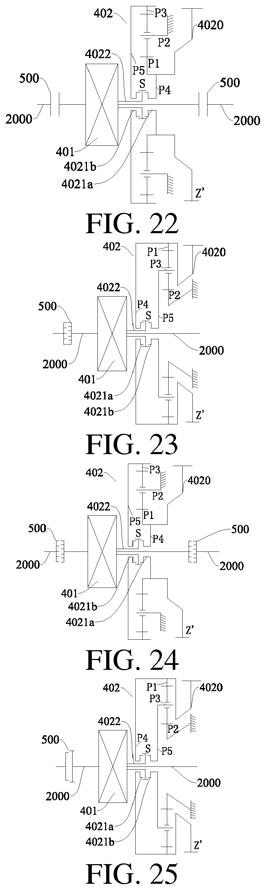

As shown in FIG. 21, a power switching on/off device 500 is disposed between a half shaft 2000 on a left side and a corresponding half-shaft gear. As shown in FIG. 22, there may be two power switching on/off devices 500, one power switching on/off device 500 may be disposed between a half shaft 2000 on a left side and a corresponding half-shaft gear, and the other power switching on/off device 500 may be disposed between a half shaft 2000 on a right side and a corresponding half-shaft gear.

There is a plurality of types of power switching on/off devices 500. For example, as shown in FIG. 21 and FIG. 22, the power switching on/off device 500 may be a clutch. Preferably, as shown in FIG. 23 and FIG. 24, the clutch may be a jaw clutch.

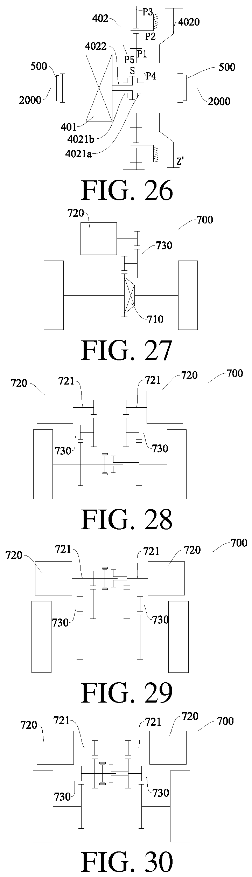

Certainly, the power switching on/off device 500 may be further of another type. For example, as shown in FIG. 25 and FIG. 26, the power switching on/off device 500 may be a synchronizer.

According to a preferred embodiment of the present invention, as shown in FIG. 2 and FIG. 5, the power transmission system 1000 may further include a second motor generator 600, the second motor generator 600 is located between the power source 100 and the speed change unit 200, one end of the second motor generator 600 is directly power-coupled to the power source 100, and another end of the second motor generator 600 is selectively power-coupled to the speed change unit 200.

The second motor generator 600 may be coaxially connected to the input end of the first clutch device 202. The second motor generator 600 may be disposed between the input end of the first clutch device 202 and the engine. In this way, when being transferred to the input end, the power of the engine inevitably passes through the second motor generator 600. In this case, the second motor generator 600 may be used as a generator to perform stationary power generation.

An input end outer tooth Z602 may be disposed on the input end of the first clutch device 202, and the second motor generator 600 is linked to the input end outer tooth Z602. A gear Z601 is disposed on a motor shaft of the second motor generator 600, and the gear Z601 is meshed with the input end outer tooth Z602. In this way, the power of the engine may be transferred to the second motor generator 600 through the input end and the input end outer tooth Z602. In this way, the second motor generator 600 may be used as a generator to perform stationary power generation.

According to another preferred embodiment of the present invention, the power transmission system 1000 may further include a second motor generator 600, the second motor generator 600 is located between the power source 100 and the speed change unit 200, one end of the second motor generator 600 is power-coupled to the power source 100. For example, one end of the second motor generator 600 is selectively power-coupled to the power source 100, and another end of the second motor generator 600 is selectively power-coupled to the speed change unit 200.

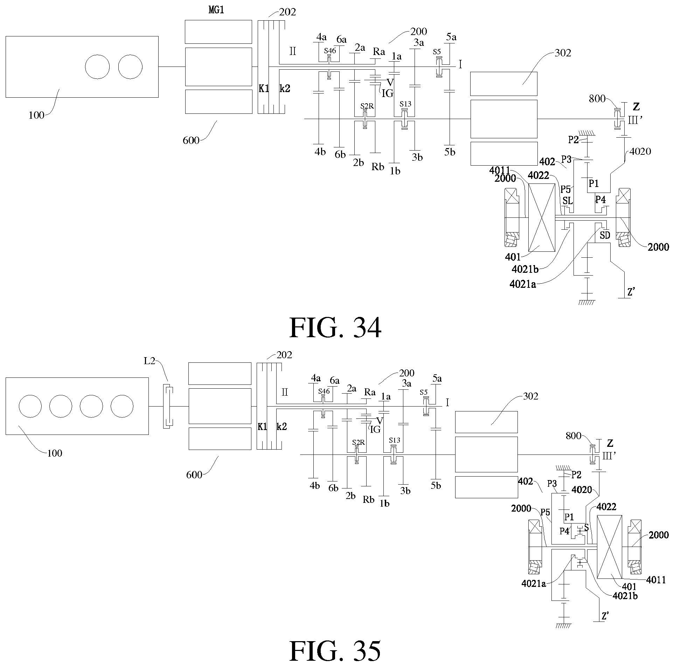

As shown in FIG. 35, the second clutch device L2 may be disposed between the second motor generator 600 and the engine. The second clutch device L2 may be a single clutch, and the single clutch may control connection or disconnection between the engine and the second motor generator 600, and may control connection or disconnection between the engine and the input end of the first clutch device 202. By disposing the second clutch device L2, a stationary power generation state of the second motor generator 600 may be properly controlled, so that the power transmission system 1000 is simple in structure and reliable in driving mode conversion.

Preferably, the second clutch device L2 is disposed in a rotor of the second motor generator 600. In this way, the axial length of the power transmission system 1000 may be better shortened, thereby reducing the volume of the power transmission system 1000, and improving arrangement flexibility of the power transmission system 1000 in the vehicle. Additionally, the second motor generator 600 may be further used as a starter.

Preferably, the power source 100, the second clutch device L2 and the input end of the double clutch are coaxially arranged. In this way, the power transmission system 1000 is compact in structure and small in volume.

It should be noted that, for the power transmission systems 1000 in the foregoing three embodiments, in the axial direction, each second motor generator 600 may be located between the power source 100 and the first clutch device 202. Such a way may effectively reduce the axial length of the power transmission system 1000, may make location arrangement of the second motor generator 600 proper, and may improve structure compactness of the power transmission system 1000.

The first motor generator 302 is a main driving motor of the power transmission system 1000. Therefore, the capacity and the volume of the first motor generator 302 are relatively large. For the first motor generator 302 and the second motor generator 600, the rated power of the first motor generator 302 is greater than the rated power of the second motor generator 600. In this way, a motor generator having small volume and small rated power may be selected as the second motor generator 600, so that the power transmission system 1000 is simple in structure and small in volume. Moreover, during stationary power generation, the transmission path between the second motor generator 600 and the power source 100 is short, and power generation efficiency is high, so that a part of the power of the power source 100 may be effectively converted into electric energy. The peak power of the first motor generator 302 is similarly greater than the peak power of the second motor generator 600.

Preferably, the rated power of the first motor generator 302 is two or more times the rated power of the second motor generator 600. The peak power of the first motor generator 302 is two or more times the peak power of the second motor generator 600. For example, the rated power of the first motor generator 302 may be 60 kw, the rated power of the second motor generator 600 may be 24 kw, the peak power of the first motor generator 302 may be 120 kw, and the peak power of the second motor generator 600 may be 44 kw.

It should be noted that, the differential 401 may be a regular open differential, for example, a bevel gear differential or a cylindrical gear differential, but is not limited thereto. Certainly, the differential 401 may alternatively be a locking differential, for example, a mechanical locking differential or an electronic locking differential. Different differential types are selected for the power transmission system 1000 according to different vehicle models. In this way, main selection bases include vehicle costs, vehicle lightweight, vehicle cross-country performance and the like.

All of the power transmitted by the foregoing power transmission system 1000 is output to two wheels of the vehicle through the system power output portion 401, but the power transmission system 1000 is not limited thereto. The power transmission system 1000 may further include an electric driving system 700, and the electric driving system 700 may be configured to drive two other wheels of the vehicle, thereby implementing four-wheel drive of the vehicle.

A plurality of arrangement forms of the electric driving system 700 is described below in detail.

As shown in FIG. 27, the electric driving system 700 may include a driving system input portion and a driving system output portion, and the driving system output portion is suitable for outputting power from the driving system input portion to two other wheels, for example, rear wheels. In this way, by adding the electric driving system 700, a quantity of driving modes of the vehicle may be increased. For example, the driving modes may be further divided into a front-wheel drive mode, a rear-wheel drive mode and a four-wheel drive mode, so that the vehicle is more applicable to different road conditions, and the power performance of the vehicle may be improved.

For example, as shown in FIG. 27, the electric driving system 700 further includes an electric driving system differential 710, and the driving system output portion is suitable for outputting power from the driving system input portion to two other wheels through the electric driving system differential 710. The electric driving system differential 710 may facilitate allocation of the power transferred from the driving system output portion to two wheels on two sides, thereby stably driving the vehicle.

Specifically, the driving system input portion may be a driving motor generator 720, the driving motor generator 720 may be a rear wheel motor generator, the rear wheel motor generator may drive two rear wheels through a speed reduction mechanism, and the driving system output portion may be a gear reducer 730 (that is, the speed reduction mechanism). Therefore, when the driving motor generator 720 works, power generated by the driving motor generator 720 may be transferred to the electric driving system differential 710 after speed reduction and torque increase of the gear reducer 730 are performed, and the electric driving system differential 710 may facilitate allocation of the power transferred from the driving system output portion to two wheels on two sides, thereby stably driving the vehicle.

For another example, as shown in FIG. 28, the driving system input portion includes two driving motor generators 720, the driving system output portion includes two driving system output sub-portions, and each driving system output sub-portion is suitable for outputting power from a corresponding driving motor generator 720 to one corresponding wheel of two other wheels. To be specific, each wheel corresponds to one driving motor generator 720 and one driving system output sub-portion. In this way, the electric driving system differential 710 may be omitted, and the two driving motor generators 720 may adjust respective rotational speeds to implement a speed difference between two wheels, so that the power transmission system 1000 is simple and reliable in structure.

As shown in FIG. 28, the foregoing two other wheels are selectively synchronized. For example, a half shaft synchronizer may be disposed on one of half shafts 2000 to be suitable for being selectively connected to the other half shaft 2000. In this way, two wheels may rotate in a same direction at a same speed, or two wheels may move at different speeds, thereby ensuring travelling stability of the vehicle.

As shown in FIG. 29, the two driving motor generators 720 are selectively synchronized. For example, a synchronizer of motor output shafts 721 may be disposed on one motor output shaft 721 to be selectively connected to the other motor output shaft 721. In this way, two wheels may rotate in a same direction at a same speed, or two wheels may move at different speeds, thereby ensuring travelling stability of the vehicle.

As shown in FIG. 30 and FIG. 31, the two driving system output sub-portions are selectively synchronized. To be specific, an output sub-portion synchronizer may be disposed on an output shaft of one of the two driving system output sub-portions and is configured to synchronize the one driving system output sub-portion with the other driving system output sub-portion. In this way, two wheels may rotate in a same direction at a same speed, or two wheels may move at different speeds, thereby ensuring travelling stability of the vehicle.

As shown in FIG. 27 to FIG. 30, the driving system output sub-portion may include a two-stage gear reducer, and power of the driving motor generator 720 subjected to two-stage speed reduction may be transferred to wheels to drive the wheels to rotate.

Alternatively, as shown in FIG. 31, the driving system output sub-portion may include a two-gear transmission. The driving motor generator 720 is selectively connected to one of gears. By disposing the two-gear transmission, a rotational speed of the driving motor generator 720 output to wheels may be changed, thereby enriching driving modes of the power transmission system 1000, and improving the economy and the power performance of the vehicle.

Specifically, the driving motor generator 720 may include a motor output shaft 721, and the two-stage gear reducer 730 or the two-gear transmission may include a driving system output sub-portion input shaft, and the driving system output sub-portion input shaft is fixedly and coaxially connected to the motor output shaft 721. In this way, the driving motor generator 720 may transfer power to the driving system output sub-portion input shaft through the motor output shaft 721, and then the power is transferred to wheels through the driving system output sub-portion to drive the vehicle to move.

For still another example, as shown in FIG. 32, the electric driving system 700 includes two wheel motors, each wheel motor directly drives one corresponding wheel of two other wheels, and the two other wheels are selectively synchronized. A half shaft synchronizer may be disposed on one half shaft 2000 to be selectively connected to the other half shaft 2000. In this way, each wheel motor may drive a corresponding wheel to rotate, and by disconnecting the half shaft synchronizer, two wheels may move at different speeds, thereby ensuring travelling stability of the vehicle.

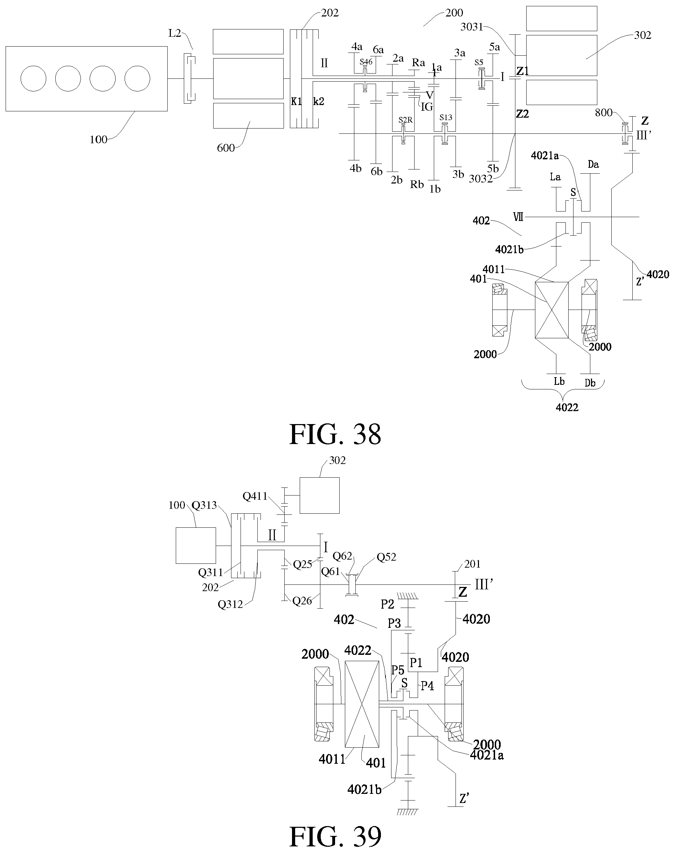

Refer to some specific embodiments of the power transmission system in FIG. 39 to FIG. 45 below. As shown in FIG. 39 to FIG. 45, the power transmission system 1000 may include: a power source 100, a first motor generator 302, a system power output portion 401, a mode conversion device 402, a speed change unit 200, and a power switching device 800.

As shown in FIG. 39 to FIG. 44, in some embodiments, the power switching device 800 is a synchronizer Q6, and the synchronizer Q6 is set to be suitable for selectively performing synchronization between the speed change unit output portion 201 and the speed change unit 200.

In other words, the synchronizer Q6 may synchronize the speed change unit 200 with the speed change unit output portion 201, and the power output by the speed change unit 200 is output to the mode conversion device 402 through the speed change unit output portion 201; or the synchronizer Q6 may alternatively disconnect the speed change unit 200 from the speed change unit output portion 201, and in this case, the speed change unit 200 cannot output power to the mode conversion device 402 directly through the speed change unit output portion 201.

It may be understood that, the power output to the mode conversion device 402 through the speed change unit output portion 201 may be output to the system power output portion 401 through the mode conversion device 402.

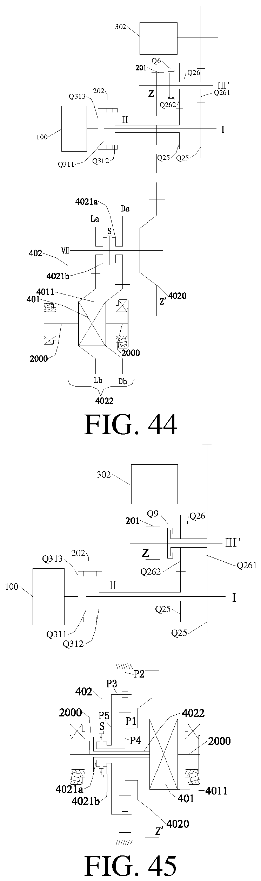

As shown in FIG. 45, in some other embodiments, the power switching device 800 is a clutch Q9, and the clutch Q9 is set to be suitable for performing power transmission or disconnection between the speed change unit output portion 201 and the speed change unit 200.

In other words, the clutch Q9 may output, to the mode conversion device 402 through the speed change unit output portion 201, the power output by the speed change unit 200; or the clutch Q9 may alternatively disconnect the speed change unit 200 from the speed change unit output portion 201, and in this case, the speed change unit 200 cannot output power to the mode conversion device 402 directly through the speed change unit output portion 201.

Herein, a function of the synchronizer Q6 may be to finally synchronize the speed change unit output portion 201 with the speed change unit 200, that is, through the synchronization function of the synchronizer Q6, the speed change unit output portion 201 can act in synchronization with the speed change unit 200, so that the speed change unit output portion 201 serving as a power output end outputs the power of the speed change unit 200. However, when the synchronizer Q6 does not synchronize the speed change unit 200 with the speed change unit output portion 201, the power of the speed change unit 200 cannot be directly output to a wheel 200 (through the speed change unit output portion 201).

In brief, the synchronizer Q6 plays a role of power switching, that is, when the synchronizer Q6 connects, the power of the speed change unit 200 may be output through the speed change unit output portion 201 and be output to the mode conversion device 402; or when the synchronizer Q6 disconnects, the speed change unit 200 cannot transfer power to the mode conversion device 402 through the speed change unit output portion 201. In this way, by controlling connection or disconnection of the synchronizer Q6, the driving mode of the entire vehicle may be converted.

Because of particularity of application occasions, the synchronizer Q6 herein has the following advantages:
a. When the synchronizer Q6 disconnects, the power of the power source 100, the speed change unit 200 and the first motor generator 302 needs to be thoroughly disconnected from the power of the mode conversion device 402, so that motions (power generation, driving, power torque transmission or the like) respectively performed by the both parties do not affect each other. This requirement is particularly important in reducing energy consumption of the vehicle. The synchronizer Q6 may quite well do this.
b. When the synchronizer Q6 connects, combined (coupled) driving power of the power source 100 and the first motor generator 302 needs to be amplified through the torque of the speed change unit 200 and then transferred to the mode conversion device 402, or driving power of a wheel is transferred to the first motor generator 302 (for power generation) sequentially through the system power output portion 401 and the mode conversion device 402. This requires that a power coupling device herein may transfer a quite large torque and have quite high stability. The synchronizer Q6 may quite well do this.

Moreover, the first motor generator 302 may adjust the speed of the speed change unit 200. For example, the first motor generator 302 may aim at the rotational speed of the speed change unit output portion 201, and adjust the speed of the speed change unit 200 by changing the rotational speed, so that the speed of the speed change unit 200 quickly matches the speed of the speed change unit output portion 201 in a time efficient manner, thereby reducing the time needed for synchronization of the synchronizer Q6, reducing the intermediate energy loss. Moreover, torqueless connection of the synchronizer Q6 can be further implemented, thereby greatly improving the transmission efficiency of the vehicle, the synchronization controllability and synchronization real-time performance. Moreover, the service life of the synchronizer Q6 is further prolonged, thereby reducing the maintenance costs of the entire vehicle. Moreover, the power transmission system 100 according to this embodiment of the present invention is compact in structure and convenient in control.

According to some embodiments of the present invention, referring to FIG. 39, the speed change unit output portion 201 may include a main reducer driving gear Z and a connection gear ring Q52, the main reducer driving gear Z and a power output shaft III' may perform relative rotation, that is, differential rotation, and the connection gear ring Q52 is fixed to the main reducer driving gear Z, that is, the connection gear ring Q52 rotates in synchronization with the main reducer driving gear Z.

Therefore, when the synchronizer Q6 needs to connect the speed change unit output portion 201 to the power output shaft III', a connection sleeve Q62 of the synchronizer Q6 may move in a direction toward the connection gear ring Q52 along the axial direction. After the rotational speed of the speed change unit output portion 201 is synchronized with the rotational speed of the power output shaft III', the connection sleeve Q62 may be connected to the connection gear ring Q52, so that rigid connection is formed among the power output shaft III', the synchronizer Q6 and the speed change unit output portion 201, and then the three parties synchronously rotate.

In the embodiment shown in FIG. 39 to FIG. 44, the speed change unit 200 includes a speed change power input portion and a speed change power output portion, and the speed change power input portion may be selectively connected to the power source 100, so as to transmit power generated by the power source 100. The speed change power output portion is constructed to be suitable for outputting the power from the speed change power input portion to the speed change unit output portion 201 through the power switching device 800.

Using an example in which the power switching device 800 is the synchronizer Q6, the speed change power output portion is constructed to be suitable for outputting the power from the speed change power input portion to the speed change unit output portion 201 through synchronization of the synchronizer Q6.

Further, the speed change power input portion includes: an input shaft (for example, a first input shaft I or a second input shaft II) and a driving gear Q25 disposed on the input shaft, and the input shaft may be selectively connected to the power source 100, so as to transmit the power generated by the power source 100. In other words, when the power source 100 needs to output power to the input shaft, the power source 100 may be connected to the input shaft, so that the power output by the power source 100 may be transferred to the input shaft. A connection manner of the power source 100 and the input shaft may be implemented through a clutch (for example, a double clutch 202 or a triple clutch Q32). Content about this part is described below in detail, and details are not described herein again.

As shown in FIG. 39 to FIG. 45, the speed change power output portion includes: a power output shaft III' and a driven gear Q26, and the driven gear Q26 is disposed on the power output shaft III' and is correspondingly meshed with the driving gear Q25 on the input shaft.

The power output shaft III' is constructed to output at least one part of the power transmitted on the input shaft. Specifically, the power output shaft III' cooperates with the input shaft to perform transmission. For example, preferably, transmission may be performed between the power output shaft III' and the input shaft through the driving gear Q25 and the driven gear Q26.

The power output shaft III' is configured to transmit at least one part of the power on the input shaft. For example, when the power transmission system 100 is in some transmission modes, for example, the first motor generator 302 performs electric power generation, a part of the power on the input shaft may be used for the power generation of the first motor generator 302, and another part may be used to drive the vehicle to travel. Certainly, all of the power on the input shaft may be used for power generation.

According to some embodiments of the present invention, the first motor generator 302 performs direct transmission or indirect transmission with one of the input shaft and the power output shaft III'. Herein, "direct transmission" means that the first motor generator 302 is directly connected to a corresponding shaft to perform transmission without being through any intermediate transmission component such as a speed change device, a clutch device, or a transmission device. For example, the output end of the first motor generator 302 is directly rigidly connected to one of the input shaft and the power output shaft III'. Advantages of direct transmission lie in reducing intermediate transmission components, and reducing energy loss in a transmission process.

"Indirect transmission" is any other transmission manner excluding direct transmission. For example, transmission is performed through an intermediate component such as a speed change device, a clutch device, or a transmission device. Advantages of the indirect transmission manner lie in that arrangement is more convenient, and a needed transmission ratio may be obtained by disposing, for example, a speed change device.

According to some embodiments of the present invention, the first motor generator 302 is set to cooperate with one of the driving gear Q25 and the driven gear Q26 to perform transmission. As shown in FIG. 39 to FIG. 40, the first motor generator 302 cooperates with the driving gear Q25 to perform transmission. As shown in FIG. 44 to FIG. 45, the first motor generator 302 cooperates with the driven gear Q26 to perform transmission.

In consideration of a problem of facilitating spatial arrangement, according to an embodiment of the present invention, the first motor generator 302 may perform transmission through an intermediate gear Q411.

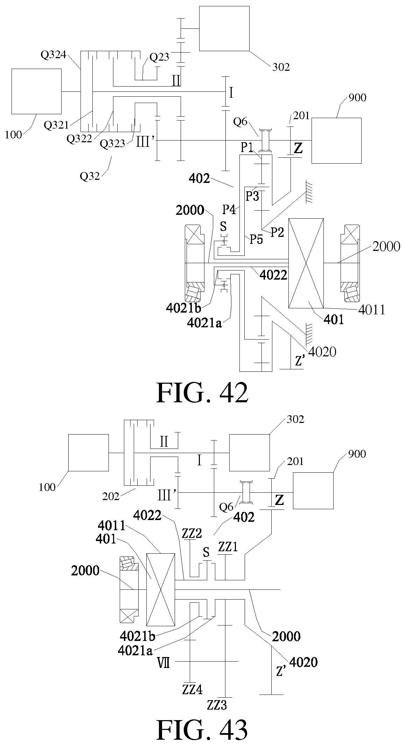

However, the present invention is not limited thereto. In another embodiment of the present invention, the first motor generator 302 is set to be connected to one of the first input shaft I and the power output shaft III'. For example, in the example of FIG. 43, the first motor generator 302 is directly connected to the first input shaft I. The first motor generator 302 is directly connected to a corresponding shaft, so that the power transmission system 100 is more compact in structure. Moreover, the circumferential size of the power transmission system 100 may be further reduced, so that it is convenient to arrange the power transmission system in a compartment of the vehicle.

The speed change unit output portion 201 may be used as the power output terminal of the power output shaft III', and is configured to output the power on the power output shaft III', the speed change unit output portion 201 may perform differential rotation relative to the power output shaft III', that is, the speed change unit output portion 201 may perform asynchronous rotation relative to the power output shaft III'. That is, the two parties have a rotational speed difference between each other, and are not rigidly connected to each other.

The power switching device 800 may be selectively power-coupled to the speed change unit output portion 201, and when the power switching device 800 is power-coupled to the speed change unit output portion 201, the power output by the speed change unit 200 is output to the mode conversion device 402 through the speed change unit output portion 201.

The power switching device 800, for example, the synchronizer Q6 may be disposed on the power output shaft III'. Specifically, referring to FIG. 39, the synchronizer Q6 may include a splined hub Q61 and a connection sleeve Q62, the splined hub Q61 may be fixed on the power output shaft III', the splined hub Q61 rotates in synchronization with the power output shaft III', and the connection sleeve Q62 may act along the axial direction of the power output shaft III' relative to the splined hub Q61, so as to selectively connect to the speed change unit output portion 201, so that the speed change unit output portion 201 rotates in synchronization with the power output shaft III'. However, it should be understood that, the structure of the synchronizer Q6 is not limited thereto.

In the power transmission system 100 according to this embodiment of the present invention, the power output by the power source 100 and/or the first motor generator 302 may be output from the speed change unit output portion 201 through connection of the power switching device 800, so that the structure is compact, and control is convenient.

In a process in which the vehicle switches a working condition, the synchronizer Q6 may be converted from a disconnection status to a connection status. In this case, the first motor generator 302 may aim at the rotational speed of the speed change unit output portion 201, and adjust the rotational speed of the power output shaft III' through rotational speed control, so that the rotational speed of the power output shaft III' matches the rotational speed of the speed change unit output portion 201 in a short time, to facilitate connection of the synchronizer Q6, thereby greatly improving transmission efficiency, and reducing intermediate energy transfer loss, and torqueless connection of the synchronizer Q6 (that is, during connection, the synchronizer Q6 basically has no radial frictional force or has a radial frictional force far less than the general level in the industry) may be implemented.

There may be a plurality of, that is, two or more than two input shafts. The plurality of input shafts is sequentially coaxially nested. As shown in FIG. 39 to FIG. 43, there are two input shafts, that is, a first input shaft I and a second input shaft II, the second input shaft II is sleeved on the first input shaft I, and the central axes of the two coincide with each other. When the power source 100 transfers power to an input shaft or is power-coupled to an input shaft, the power source 100 may be selectively connected to one of the plurality of input shafts.

Further, as shown in FIG. 39 to FIG. 43, one driving gear Q25 is fixed on each input shaft. A plurality of driven gears Q26 is fixed on the power output shaft III'.

As shown in FIG. 39 to FIG. 43, the plurality of driven gears Q26 is respectively correspondingly meshed with driving gears Q25 on the plurality of input shafts According to an embodiment of the present invention, the quantity of driven gears Q26 may be the same as the quantity of input shafts. For example, if there are two driven gears Q26, there are two input shafts. In this way, the two driven gears Q26 may be respectively correspondingly meshed with the driving gears Q25 on the two input shafts to perform transmission, so that the two pairs of gears may form two gear positions to perform transmission.

Further, referring to FIG. 39 to FIG. 40, the double clutch 202 is disposed between the power source 100 and the first input shaft I and the second input shaft II.

The double clutch 202 has an input end Q313, a first output end Q311 and a second output end Q312, and the power source 100 is connected to the input end Q313 of the double clutch 202. Specifically, the power source 100 may be connected to the input end Q313 of the double clutch 202 through a plurality of forms such as a flywheel, a shock absorber or a torsion disk.

The first output end Q311 of the double clutch 202 is connected to the first input shaft I, so that the first output end Q311 rotates in synchronization with the first input shaft I. The second output end 312 of the double clutch 202 is connected to the second input shaft II, so that the second output end Q312 rotates in synchronization with the second input shaft II.

The input end Q313 of the double clutch 202 may be a shell of the double clutch 202, and the first output end Q311 and the second output end Q312 of the double clutch may be two driven disks. The input end Q313 is connected to one of the first output end Q311 and the second output end Q312, so that the power transferred from the input end Q313 may be output through one of the first output end Q311 and the second output end Q312.

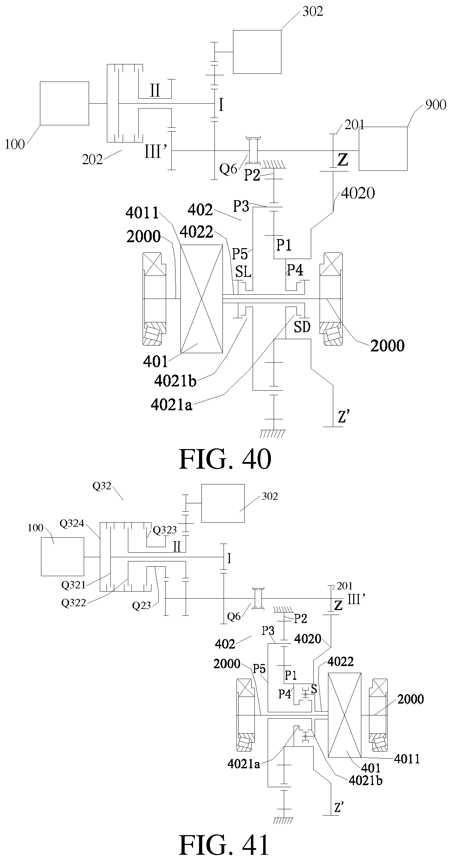

As shown in FIG. 41 and FIG. 42, according to an embodiment of the present invention, three or more input shafts may be disposed according to a transmission need, and one driving gear Q25 may be fixed on each input shaft, so that a larger quantity of input shafts indicates more gear positions on which transmission may be performed, and a larger range of a transmission ratio of the power transmission system 100, thereby adapting to requirements of a plurality of vehicle models for transmission.

As shown in FIG. 41 and FIG. 42, the plurality of input shafts includes three shafts, that is, a first input shaft I, a second input shaft II and a third input shaft Q23, the second input shaft II is sleeved on the first input shaft I, and the third input shaft Q23 is sleeved on the second input shaft II.

In the variant embodiment, the power transmission system 100 further includes a triple clutch Q32, the triple clutch Q32 has an input end Q324, a first output end Q321, a second output end Q322 and a third output end Q323, the power source 100 is connected to the input end Q324 of the triple clutch Q32, the first output end Q321 of the triple clutch Q32 is connected to the first input shaft I, the second output end Q322 of the triple clutch Q32 is connected to the second input shaft II, and the third output end Q323 of the triple clutch Q32 is connected to the third input shaft Q23.

Similarly, the input end of the triple clutch Q32 may be a shell thereof, three output ends thereof may be three driven disks, and the input end may be connected to one of the three output ends, or the input end is disconnected from all of the three output ends. It may be understood that, the work principle of the triple clutch Q32 is similar to that of double clutch 202, and details are not described herein again.

As another variant embodiment of the power transmission system 100 described in the foregoing embodiment, as shown in FIG. 44 to FIG. 45, in the power transmission system 100, the driven gear Q26 is a linkage gear structure, and the linkage gear structure Q26 is freely sleeved on the power output shaft III', that is, the two may perform differential rotation. The synchronizer Q6 is disposed on the power output shaft III' and may be selectively connected to the linkage gear structure Q26.

In the embodiment, specifically, there are two input shafts, that is, the first input shaft I and the second input shaft II, one driving gear Q25 is fixed on each input shaft, the linkage gear structure Q26 is a duplicate gear, the duplicate gear 26 has a first gear portion Q261 and a second gear portion Q262, and the first gear portion Q261 and the second gear portion Q262 are respectively correspondingly meshed with two driving gears Q25.

When the power transmission system 100 in the embodiment performs power transmission, the synchronizer Q6 may be connected to the duplicate gear 26, so that the power output by the power source 100 and/or the first motor generator 302 may be output through the speed change unit output portion 201 (for example, the main reducer driving gear Z).

In the embodiment, the first motor generator 302 may perform direct transmission or indirect transmission with one of the input shaft and the output shaft. Specifically, a related transmission manner described in the foregoing embodiment may be used, and details are not described herein again. Moreover, for each other component, for example, a clutch (for example, the double clutch 202 or the triple clutch Q32) between the power source 100 and the input shaft, a same disposition manner as that in the foregoing embodiment may be used, and details are not described herein again.

In some embodiments of the present invention, as shown in FIG. 42 to FIG. 43, the power transmission system 100 further includes a third motor generator 900, an output end of the third motor generator 900 is set to perform transmission in cooperation with the speed change unit output portion 201, and the output end of the third motor generator 900 may be a motor shaft of the third motor generator 900.

According to some embodiments of the present invention, in duration in which the synchronizer Q6 is converted from a disconnection status of separating from the speed change unit output portion 201 to a connection status of connecting to the speed change unit output portion 201, the first motor generator 302 may be configured to adjust the rotational speed of the power output shaft III'. According to some other embodiments of the present invention, in duration in which the synchronizer Q6 is converted from a disconnection status of disconnecting from the speed change unit output portion 201 to a connection status of connecting to the speed change unit output portion 201, the first motor generator 302 may be configured to adjust the rotational speed of the power output shaft III' and/or the third motor generator 900 may be configured to adjust the rotational speed of the speed change unit output portion 201.

Specifically, the third motor generator 900 may adjust the rotational speed of the speed change unit output portion 201. For example, when the synchronizer Q6 is converted from a separation status to a connection status, the third motor generator 900 may adjust the rotational speed of the speed change unit output portion 201 according to a need, so that the rotational speed of the power output shaft III' matches the rotational speed of the speed change unit output portion 201 in a short time, thereby facilitating connection of the synchronizer Q6. Moreover, the third motor generator 900 may cooperate with the first motor generator 302 to perform speed adjustment at the same time, so that the rotational speed of the power output shaft III' is synchronized with the rotational speed of the speed change unit output portion 201 in a shorter time, thereby satisfying a connection condition in a shortest time, connecting to the synchronizer Q6, and greatly improving transmission efficiency.

In brief, optionally, the first motor generator 302 may perform independent speed adjustment. Alternatively, optionally, the third motor generator 900 may perform independent speed adjustment. Moreover, further optionally, the first motor generator 302 and the third motor generator 900 may perform speed adjustment at the same time.

In this way, connection/disconnection of the synchronizer Q6 controls power output of the speed change unit 200. Moreover, in duration in which the synchronizer Q6 is converted from a disconnection status to a connection status, the first motor generator 302 and the third motor generator 900 may respectively perform speed adjustment compensation for the power output shaft III' and the speed change unit output portion 201, so that the rotational speed of the power output shaft III' rapidly matches the rotational speed of the speed change unit output portion 201, thereby rapidly implementing torqueless connection of the synchronizer Q6.

There may be a plurality of connection manners of the third motor generator 900 and the speed change unit output portion 201, and various factors such as space, costs, and the rotational speed of the motor may be comprehensively considered for a specific arrangement form. For example, as shown in FIG. 42 and FIG. 43, the output end of the third motor generator 900 may be directly connected to the speed change unit output portion 201, and the third motor generator 900 and the power output shaft III' are coaxially arranged. In this way, the power transmission system 100 is more compact in structure. However, the present invention is not limited thereto. Indirect transmission may alternatively be performed between the third motor generator 900 and the speed change unit output portion 201 through a gear transmission mechanism, a worm and gear transmission mechanism, or a chain wheel transmission mechanism.

Driving modes of the power transmission system 1000 according to the embodiments of the present invention are described in detail below with reference to accompanying drawings.

The power transmission system 1000 for the vehicle has a first power source driving mode, and when the power transmission system for the vehicle is in the first power source driving mode, the first motor generator 302 does not work, the speed change unit 200 is power-coupled to the power source 100, the mode conversion device 402 is power-coupled to the speed change unit output portion 201 and the system power output portion 401, the speed change unit 200 is power-coupled to the speed change unit output portion 201 through the power switching device 800, power output by the power source 100 is output to the system power output portion 401 sequentially through the speed change unit 200, the power switching device 800, the speed change unit output portion 201 and the mode conversion device 402, and the mode conversion device 402 outputs, to the system power output portion 401 at an original speed, the power received from the speed change unit output portion 201. This is normal driving of the vehicle.

The power transmission system 1000 for the vehicle has a second power source driving mode, and when the power transmission system for the vehicle is in the second power source driving mode, the first motor generator 302 does not work, the speed change unit 200 is power-coupled to the power source 100, the mode conversion device 402 is power-coupled to the speed change unit output portion 201 and the system power output portion 401, the speed change unit 200 is power-coupled to the speed change unit output portion 201 through the power switching device 800, power output by the power source 100 is output to the input end 4011 of the system power output portion 401 sequentially through the speed change unit 200, the power switching device 800, the speed change unit output portion 201 and the mode conversion device 402, and the mode conversion device 402 decelerates the power received from the speed change unit output portion 201 and outputs the decelerated power to the system power output portion 401. In this way, the power output by the power source 100 may be decelerated once through the speed change unit 200 and then decelerated again through the mode conversion device 402, thereby better playing a role of speed reduction and torque increase, and further improving the passing-through capability of the vehicle.

The power transmission system 1000 for the vehicle has a first pure electric driving mode, and when the power transmission system for the vehicle is in the first pure electric driving mode, the power source 100 does not work, the mode conversion device 402 is power-coupled to the speed change unit output portion 201 and the system power output portion 401, the speed change unit 200 is power-coupled to the speed change unit output portion 201 through the power switching device 800, power output by the first motor generator 302 is output to the system power output portion 401 sequentially through the speed change unit 200, the power switching device 800, the speed change unit output portion 201, and the mode conversion device 402, and the mode conversion device 402 outputs, to the system power output portion 401 at an original speed, the power received from the speed change unit output portion 201. In this way, the power output path of the first motor generator 302 is short, and the transmission efficiency is high, thereby improving the driving efficiency of the first motor generator 302, and improving the power performance of the vehicle.

The power transmission system 1000 for the vehicle has a second pure electric driving mode, and when the power transmission system for the vehicle is in the second pure electric driving mode, the power source 100 does not work, the mode conversion device 402 is power-coupled to the speed change unit output portion 201 and the system power output portion 401, the speed change unit 200 is power-coupled to the speed change unit output portion 201 through the power switching device 800, power output by the first motor generator 302 is output to the input end 4011 of the system power output portion 401 sequentially through the speed change unit 200, the power switching device 800, the speed change unit output portion 201, and the mode conversion device 402, and the mode conversion device 402 decelerates the power received from the speed change unit output portion 201 and outputs the decelerated power to the system power output portion 401. The power output path of the first motor generator 302 is short, the transmission efficiency is suitable, and the output rotational speed is suitable, so that the passing-through performance of the vehicle can be improved.

The power transmission system 1000 for the vehicle has a first hybrid driving mode, and when the power transmission system for the vehicle is in the first hybrid driving mode, both the power source 100 and the first motor generator 302 work, the speed change unit 200 is power-coupled to the power source 100, the mode conversion device 402 is power-coupled to the speed change unit output portion 201 and the system power output portion 401, the speed change unit 200 is power-coupled to the speed change unit output portion 201 through the power switching device 800, power output by the power source 100 is output to the system power output portion 401 sequentially through the speed change unit 200, the power switching device 800, the speed change unit output portion 201 and the mode conversion device 402, power output by the first motor generator 302 is output to the system power output portion 401 sequentially through the speed change unit 200, the power switching device 800, the speed change unit output portion 201 and the mode conversion device 402, the power output by the power source 100 and the power output by the first motor generator 302 are coupled and then output to the mode conversion device 402, and the mode conversion device 402 outputs, to the system power output portion 401 at an original speed, the power received from the speed change unit output portion 201. In this way, the power transmission efficiency of the power source 100 is high, the control policy is simple, the output path of the first motor generator 302 is short, and the transmission efficiency is high, thereby improving driving efficiency of the first motor generator 302, and improving power performance of the vehicle.

The power transmission system 1000 for the vehicle has a second hybrid driving mode, and when the power transmission system for the vehicle is in the second hybrid driving mode, both the power source 100 and the first motor generator 302 work, the speed change unit 200 is power-coupled to the power source 100, the mode conversion device 402 is power-coupled to the speed change unit output portion 201 and the system power output portion 401, the speed change unit 200 is power-coupled to the speed change unit output portion 201 through the power switching device 800, power output by the power source 100 is output to the system power output portion 401 sequentially through the speed change unit 200, the power switching device 800, the speed change unit output portion 201 and the mode conversion device 402, power output by the first motor generator 302 is output to the system power output portion 401 sequentially through the speed change unit 200, the power switching device 800, the speed change unit output portion 201 and the mode conversion device 402, the power output by the power source 100 and the power output by the first motor generator 302 are coupled and then output to the mode conversion device 402, and the mode conversion device 402 decelerates the power received from the speed change unit output portion 201 and outputs the decelerated power to the system power output portion 401. In this way, the power output by the power source 100 may be decelerated once through the speed change unit 200 and then decelerated again through the mode conversion device 402, thereby better playing a role of speed reduction and torque increase, and further improving the passing-through capability of the vehicle. Moreover, the power output path of the first motor generator 302 is short, and the transmission efficiency is suitable, so that the passing-through capability of the vehicle can be improved.

The power transmission system 1000 for the vehicle has a first driving power generation mode, and when the power transmission system 1000 for the vehicle is in the first driving power generation mode, the power source 100 works, the speed change unit 200 is power-coupled to the power source 100, the mode conversion device 402 is power-coupled to the speed change unit output portion 201 and the system power output portion 401, the speed change unit 200 is power-coupled to the speed change unit output portion 201 through the power switching device 800, a part of power output by the power source 100 is output to the system power output portion 401 sequentially through the speed change unit 200, the power switching device 800, the speed change unit output portion 201 and the mode conversion device 402, the mode conversion device 402 outputs, to the system power output portion 401 at an original speed, the power received from the speed change unit output portion 201, and another part of the power output by the power source 100 is output to the first motor generator 302 through the speed change unit 200, to drive the first motor generator 302 to perform power generation. In this way, a form of performing power generation while driving the vehicle by the power source 100 may be formed, the power output efficiency of the power source 100 is high, and the control policy is simple.

The power transmission system 1000 for the vehicle has a second driving power generation mode, and when the power transmission system 1000 for the vehicle is in the second driving power generation mode, the power source 100 works, the speed change unit 200 is power-coupled to the power source 100, the mode conversion device 402 is power-coupled to the speed change unit output portion 201 and the system power output portion 401, the speed change unit 200 is power-coupled to the speed change unit output portion 201 through the power switching device 800, a part of power output by the power source 100 is output to the system power output portion 401 sequentially through the speed change unit 200, the power switching device 800, the speed change unit output portion 201 and the mode conversion device 402, the mode conversion device 402 decelerates the power received from the speed change unit output portion 201 and outputs the decelerated power to the system power output portion 401, and another part of the power output by the power source 100 is output to the first motor generator 302 through the speed change unit 200, to drive the first motor generator 302 to perform power generation. In this way, a form of performing power generation while driving the vehicle by the power source 100 may be formed, the power output efficiency of the power source 100 is high, and the control policy is simple.

The power transmission system 1000 for the vehicle has a first braking energy recycling mode, and when the power transmission system 1000 for the vehicle is in the first braking energy recycling mode, the mode conversion device 402 is power-coupled to the speed change unit output portion 201 and the system power output portion 401, the speed change unit 200 is power-coupled to the speed change unit output portion 201 through the power switching device 800, power from wheels of the vehicle drives the first motor generator 302 sequentially through the system power output portion 401, the mode conversion device 402, the speed change unit output portion 201, the power switching device 800, and the speed change unit 200 to perform power generation, and the mode conversion device 402 outputs, to the speed change unit output portion 201 at an original speed, the power received from the system power output portion 401. In this case, the first motor generator 302 may recycle energy from the wheels, energy waste may be reduced, and the travelling mileage of the vehicle may be improved.

The power transmission system 1000 for the vehicle has a second braking energy recycling mode, and when the power transmission system 1000 for the vehicle is in the second braking energy recycling mode, the mode conversion device 402 is power-coupled to the speed change unit output portion 201 and the system power output portion 401, the speed change unit 200 is power-coupled to the speed change unit output portion 201 through the power switching device 800, power from wheels of the vehicle drives the first motor generator 302 sequentially through the system power output portion 401, the mode conversion device 402, the speed change unit output portion 201, the power switching device 800, and the speed change unit 200 to perform power generation, and the mode conversion device 402 accelerates the power received from the system power output portion 401 and outputs the accelerated power to the speed change unit output portion 201. In this case, the first motor generator 302 may recycle energy from the wheels, energy waste may be reduced, and the travelling mileage of the vehicle may be improved.

The power transmission system 1000 for the vehicle has a reverse-drive starting mode, and when the power transmission system for the vehicle is in the reverse-drive starting mode, the power output by the first motor generator 302 is output to the power source 100 through the speed change unit 200, to drive the power source 100 to start. In this case, the first motor generator 302 is used as a starter. In this way, the first motor generator 302 may rapidly start the engine, so that starting efficiency of the engine is high, and the energy loss of the first motor generator 302 may be reduced.

The power transmission system 1000 for the vehicle has a first stationary power generation mode, and when the power transmission system 1000 for the vehicle is in the first stationary power generation mode, the second motor generator 600 is power-coupled to the power source 100, the mode conversion device 402 disconnects the speed change unit output portion 201 from the system power output portion 401, the speed change unit 200 is disconnected from the speed change unit output portion 201 through the power switching device 800, and the power output by the power source 100 directly drives the second motor generator 600 to perform power generation. The second motor generator 600 directly performs power generation, so that the power generation efficiency is high, and the energy loss is small.

The power transmission system 1000 for the vehicle has a second stationary power generation mode, and when the power transmission system 1000 for the vehicle is in the second stationary power generation mode, the second motor generator 600 is power-coupled to the power source 100, the second motor generator 600 is power-coupled to and the speed change unit 200, the mode conversion device 402 disconnects the speed change unit output portion 201 from the system power output portion 401, the speed change unit 200 is power-coupled to the speed change unit output portion 201 through the power switching device 800, a part of the power output by the power source 100 directly drives the second motor generator 600 to perform power generation, and another part of the power output by the power source 100 is output to the first motor generator 302 sequentially through the second motor generator 600 and the speed change unit 200 and drives the first motor generator 302 to perform power generation. In this case, the first motor generator 302 and the second motor generator unit 600 may perform power generation at the same time, so that the power generation efficiency is high.

The power transmission system 1000 for the vehicle has a third driving power generation mode, and when the power transmission system 1000 for the vehicle is in the third driving power generation mode, the power source 100 works, the second motor generator 600 is power-coupled to the power source 100, the second motor generator 600 is power-coupled to the speed change unit 200, the mode conversion device 402 is power-coupled to the speed change unit output portion 201 and the system power output portion 401, the speed change unit 200 is power-coupled to the speed change unit output portion 201 through the power switching device 800, a part of power output by the power source 100 is output to the system power output portion 401 sequentially through the speed change unit 200, the power switching device 800, the speed change unit output portion 201, and the mode conversion device 402, the mode conversion device 402 outputs, to the system power output portion 401 at an original speed, the power received from the speed change unit output portion 201 or decelerates the power received from the speed change unit output portion and then outputs the decelerated power to the system power output portion, and another part of the power output by the power source 100 directly drives the second motor generator 600 to perform power generation. In this way, the power generation efficiency of the second motor generator 600 is high, and the power output by the first motor generator 302 is suitable.

The power transmission system 1000 for the vehicle has a fourth driving power generation mode, and when the power transmission system 1000 for the vehicle is in the fourth driving power generation mode, the power source 100 works, the second motor generator 600 is power-coupled to the power source 100, the second motor generator 600 is power-coupled to the speed change unit 200, the mode conversion device 402 is power-coupled to the speed change unit output portion 201 and the system power output portion 401, the speed change unit 200 is power-coupled to the speed change unit output portion 201 through the power switching device 800, a first part of power output by the power source 100 is output to the system power output portion 401 sequentially through the speed change unit 200, the power switching device 800, the speed change unit output portion 201, and the mode conversion device 402, the mode conversion device 402 outputs, to the system power output portion 401 at an original speed, the power received from the speed change unit output portion 201 or decelerates the power received from the speed change unit output portion and then outputs the decelerated power to the system power output portion, a second part of the power output by the power source 100 is output to the first motor generator 302 through the speed change unit 200, to drive the first motor generator 302 to perform power generation, and a third part of the power output by the power source 100 directly drives the second motor generator 600 to perform power generation. In this way, the first motor generator 302 and the second motor generator 600 perform power generation at the same time, the power output by the engine is suitable, and the power generation efficiency is high.

The power transmission system 1000 for the vehicle has a rapid starting mode. When the power transmission system 1000 for the vehicle is in the rapid starting mode, the second motor generator 600 is power-coupled to the power source 100, and the power output by the second motor generator 600 directly drives the power source 100 to start. The second motor generator 600 may be used as a starter, and the starting efficiency is high.

The power transmission system 1000 for the vehicle has a third braking energy recycling mode, and when the power transmission system 1000 for the vehicle is in the third braking energy recycling mode, the mode conversion device 402 is power-coupled to the speed change unit output portion 201 and the system power output portion 401, the speed change unit 200 is power-coupled to the speed change unit output portion 201 through the power switching device 800, the second motor generator 600 is disconnected from the power source 100, power from wheels of the vehicle drives the second motor generator 600 sequentially through the system power output portion 401, the mode conversion device 402, the speed change unit output portion 201, the power switching device 800, and the speed change unit 200 to perform power generation, and the mode conversion device 402 outputs, to the speed change unit output portion 201 at an original speed, the power received from the system power output portion 401. The second motor generator 600 recycles energy from the wheels, and the recycling efficiency is high.

The power transmission system 1000 for the vehicle has a fourth braking energy recycling mode, and when the power transmission system 1000 for the vehicle is in the fourth braking energy recycling mode, the mode conversion device 402 is power-coupled to the speed change unit output portion 201 and the system power output portion 401, the second motor generator 600 is disconnected from the power source 100, the speed change unit 200 is power-coupled to the speed change unit output portion 201 through the power switching device 800, power from wheels of the vehicle drives the second motor generator 600 sequentially through the system power output portion 401, the mode conversion device 402, the speed change unit output portion 201, the power switching device 800, and the speed change unit 200 to perform power generation, and the mode conversion device 402 accelerates the power received from the system power output portion 401 and outputs the accelerated power to the speed change unit output portion 201. The second motor generator 600 recycles energy from the wheels, and the recycling efficiency is high.

Power transmission systems 1000 of two different embodiments are described below in detail.

A first power transmission system 1000 according to the present invention includes: a power source 100, a double clutch 202, a first input shaft I, a second input shaft II, a power output shaft III', a reverse-gear intermediate shaft V, a first motor generator 302, a main reducer driving gear Z, a power switching device 800, a main reducer driven gear Z', a system power output portion 401 and a rear wheel motor generator.

The double clutch has an input end, a first output end and a second output end, and an output end of the power source 100 is connected to the input end of the double clutch 202. The first input shaft I is connected to the first output end, the second input shaft II is connected to the second output end, the second input shaft II is coaxially sleeved on the first input shaft I, at least one first driving gear is fixedly disposed on and at least one second driving gear is freely sleeved on each of the first input shaft I and the second input shaft II, a reverse-gear driving gear Ra is further fixedly disposed on one of the second input shaft II and the first input shaft I, and the at least one second driving gear is selectively connected to a corresponding input shaft.

The reverse-gear driven gear Rb and at least one first driven gear are freely sleeved on the power output shaft III', the at least one first driven gear is correspondingly meshed with the at least one first driving gear, at least one second driven gear is fixedly disposed on the power output shaft III', the at least one second driven gear is correspondingly meshed with the at least one second driving gear, and each of the reverse-gear driven gear Rb and the at least one first driven gear is selectively connected to the power output shaft III'. An idle gear IG is fixedly disposed on the reverse-gear intermediate shaft V, and the idle gear IG is meshed with the reverse-gear driving gear Ra and is meshed with the reverse-gear driven gear Rb.

The first motor generator 302 is power-coupled to the power output shaft III', the power output shaft III' is power-coupled to or power-decoupled from the main reducer driving gear Z through the power switching device 800, and the main reducer driven gear Z' is meshed with the main reducer driving gear Z, where the main reducer driven gear Z' is selectively connected to an input end (4011) of the system power output portion (401), so that power received by the main reducer driven gear Z' is suitable for being output to the system power output portion 401 at an original speed or being decelerated and then output to the system power output portion, and the system power output portion (401) is suitable for outputting the power from the main reducer driven gear Z' to two front wheels.

The rear wheel motor generator drives two rear wheels through a speed reduction mechanism.

A second power transmission system 1000 according to the present invention includes: a power source 100, a double clutch 202, a first input shaft I, a second input shaft II, a power output shaft III', a first motor generator 302, a main reducer driving gear Z, a connection gear ring, a main reducer driven gear Z', a system power output portion 401, a synchronizer and a rear wheel motor generator.

The double clutch 202 has an input end, a first output end and a second output end, and an output end of the power source 100 is connected to the input end of the double clutch 202. The first input shaft I is connected to the first output end, the second input shaft II is connected to the second output end, the second input shaft II is coaxially sleeved on the first input shaft I, and one driving gear Q25 is fixedly disposed on each of the first input shaft I and the second input shaft II. Two driven gears Q26 are fixedly disposed on the power output shaft III', and the two driven gears Q26 are respectively correspondingly meshed with the driving gears Q25 on the first input shaft I and the second input shaft II.

The first motor generator 302 performs indirect transmission with one of the driving gears Q25 through an intermediate gear Q411, and the main reducer driving gear Z may perform differential rotation relative to the power output shaft III'

The connection gear ring Q52 is fixed to the main reducer driving gear Z. The main reducer driven gear Z' is meshed with the main reducer driving gear Z, where the main reducer driven gear Z' is selectively connected to an input end (4011) of the system power output portion (401), so that power received by the main reducer driven gear Z' is suitable for being output to the system power output portion 401 at an original speed or being decelerated and then output to the system power output portion, the system power output portion (401) is suitable for outputting the power from the main reducer driven gear Z' to two front wheels, and the synchronizer Q6 is disposed on the power output shaft III' and is set to be selectively connected to the connection gear ring Q52.

The rear wheel motor generator drives two rear wheels through a speed reduction mechanism.

A vehicle according to an embodiment of the present invention includes the power transmission system 1000 of the foregoing embodiment.

In the description of the present invention, it should be understood that, orientations or position relationships indicated by terms such as "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", and "circumferential" are orientations or position relationship shown based on the accompanying drawings, and are merely used for describing the present invention and simplifying the description, rather than indicating or implying that the apparatus or element should have a particular orientation or be constructed and operated in a particular orientation, and therefore, should not be construed as a limitation on the present invention.

In addition, terms "first" and "second" are used only for description objectives, and shall not be construed as indicating or implying relative importance or implying a quantity of indicated technical features. Therefore, a feature restricted by "first" or "second" may explicitly indicate or implicitly include at least one such feature. In the description of the present invention, unless otherwise specifically limited, "multiple" means at least two, for example, two or three.

In the present invention, unless explicitly specified or limited otherwise, the terms "mounted, " "connected, " "connection", and "fixed" should be understood broadly, for example, which may be fixed connections, detachable connections or integral connections; may be mechanical connections or electrical connections or communication with each other; may be direct connections, indirectly connected with each other through an intermediate medium, or communications inside two elements or an interaction relationship of two elements, unless otherwise specifically limited. Those of ordinary skill in the art can understand specific meanings of the terms in the present invention according to specific situations.

In the present invention, unless explicitly specified or limited otherwise, a first characteristic "on" or "under" a second characteristic may be the first characteristic in direct contact with the second characteristic, or the first characteristic in indirect contact with the second characteristic through an intermediate medium. Moreover, the first characteristic "on", "above" and "over" the second characteristic may be the first characteristic right above or obliquely above the second characteristic, or only indicates that a horizontal height of the first characteristic is greater than that of the second characteristic. The first characteristic "under", "below" and "beneath" the second characteristic may be the first characteristic right below or obliquely below the second characteristic, or only indicates that a horizontal height of the first characteristic is less than that of the second characteristic.

In the descriptions of this specification, a description of a reference term such as "an embodiment", "some embodiments", "an example", "a specific example", or "some examples" means that a specific feature, structure, material, or characteristic that is described with reference to the embodiment or the example is included in at least one embodiment or example of the present invention. In this specification, exemplary descriptions of the foregoing terms do not necessarily refer to a same embodiment or example. In addition, the described specific feature, structure, material, or characteristic may be combined in a proper manner in any one or more embodiments or examples. In addition, with no conflict, a person skilled in the art can integrate and combine different embodiments or examples and features of the different embodiments and examples described in this specification.

Although the embodiments of the present invention are shown and described above, it can be understood that the foregoing embodiments are exemplary, and should not be construed as limitations to the present invention. A person of ordinary skill in the art can make changes, modifications, replacements, and variations to the foregoing embodiments within the scope of the present invention.

## Claims

1. A power transmission system for a vehicle, comprising:
a power source;
a speed change unit, wherein the speed change unit is suitable for being selectively power-coupled to the power source;
a first motor generator, wherein the first motor generator is power-coupled to the speed change unit;
a speed change unit output portion, wherein the speed change unit output portion is constructed to be suitable for outputting power output through the speed change unit;
a system power output portion;
a mode conversion device, wherein the speed change unit output portion is power-coupled to or power-decoupled from the system power output portion through the mode conversion device, and the speed change unit output portion is power-coupled to the system power output portion through the mode conversion device, so that the mode conversion device is suitable for decelerating the power received from the speed change unit output portion and then outputting the decelerated power to the system power output portion; and
a power switching device, wherein the speed change unit is power-coupled to or power-decoupled from the speed change unit output portion through the power switching device.

2. The power transmission system for a vehicle according to claim 1, wherein when the speed change unit is disconnected from the speed change unit output portion through the power switching device, power output by the power source is suitable for directly driving the first motor generator through the speed change unit to perform power generation.

3. The power transmission system for a vehicle according to claim 1, wherein when the speed change unit output portion is power-coupled to the system power output portion through the mode conversion device, the mode conversion device is further suitable for outputting, to the system power output portion at an original speed, the power received from the speed change unit output portion.

4. The power transmission system for a vehicle according to claim 1, wherein the mode conversion device comprises a conversion device input portion and a conversion device output portion, the conversion device input portion is power-coupled to the speed change unit output portion, the conversion device output portion is connected to an input end of the system power output portion, and the conversion device input portion is selectively power-coupled to the conversion device output portion.

5. The power transmission system for a vehicle according to claim 4, wherein when the conversion device input portion is power-coupled to the conversion device output portion, the rotational speed of the conversion device input portion is greater than or equal to the rotational speed of the conversion device output portion.

6. The power transmission system for a vehicle according to claim 4, wherein when the conversion device input portion is disconnected from the conversion device output portion, and the speed change unit is disconnected from the speed change unit output portion through the power switching device, power output by the power source is suitable for directly driving the first motor generator through the speed change unit to perform power generation.

7. The power transmission system for a vehicle according to claim 1, wherein the speed change unit output portion is power-coupled to the mode conversion device, and the speed change unit is power-coupled to the speed change unit output portion through the power switching device, so that power output by at least one of the power source and the first motor generator is output to the mode conversion device sequentially through the speed change unit and the speed change unit output portion.

8. The power transmission system for a vehicle according to claim 4, wherein the mode conversion device further comprises a first conversion portion and a second conversion portion, the conversion device output portion is selectively connected to one of the first conversion portion and the second conversion portion, and the conversion device input portion is fixedly connected to the first conversion portion.

9. The power transmission system for a vehicle according to claim 8, wherein
the conversion device output portion is suitable for being connected to the first conversion portion, so that the rotational speed of the conversion device input portion is the same as the rotational speed of the input end of the system power output portion; and
the conversion device output portion is suitable for being connected to the second conversion portion, so that the rotational speed of the conversion device input portion is reduced and then output to the system power output portion.

10. The power transmission system for a vehicle according to claim 9, wherein the mode conversion device comprises:
a main reducer driven gear, wherein the main reducer driven gear is the conversion device input portion; and
a planet gear mechanism, wherein the planet gear mechanism comprises a first element, a second element and a third element, the first element is fixed to the main reducer driven gear, the second element is fixedly disposed, the first element is the first conversion portion, and the third element is the second conversion portion.

11. The power transmission system for a vehicle according to claim 10, wherein the mode conversion device further comprises a conversion device connector, and the conversion device output portion is selectively connected to one of the first element and the third element through the conversion device connector.

12. The power transmission system for a vehicle according to claim 11, wherein in the axial direction of the central axis of the planet gear mechanism, the conversion device connector is located between the first element and the third element.

13. The power transmission system for a vehicle according to claim 12, wherein the conversion device output portion is a shaft sleeve, one end of the shaft sleeve is fixedly connected to the input end of the system power output portion, and the conversion device connector is fixedly disposed on the other end of the shaft sleeve.

14. The power transmission system for a vehicle according to claim 11, wherein in the axial direction of the central axis of the planet gear mechanism, the conversion device connector is located on a side of the planet gear mechanism.

15. The power system for a vehicle according to claim 14, wherein the conversion device output portion is a shaft sleeve, one end of the shaft sleeve is fixed to the input end of the system power output portion, the conversion device connector is disposed on the other end of the shaft sleeve, and the shaft sleeve is located on a side of the planet gear mechanism.

16. The power system for a vehicle according to claim 15, wherein the conversion device output portion is a shaft sleeve, one end of the shaft sleeve is fixed to the input end of the system power output portion, the conversion device connector is disposed on the other end of the shaft sleeve, and the other end of the shaft sleeve passes through the planet gear mechanism.

17. The power system for a vehicle according to claim 11, wherein the conversion device connector comprises a first connection portion and a second connection portion spaced apart from each other, the first connection portion is suitable for selectively connecting the conversion device output portion to the first element, and the second connection portion is suitable for selectively connecting the conversion device output portion to the third element.

18. The power system for a vehicle according to claim 17, wherein the conversion device connector comprises a direct-gear synchronizer and a low-gear synchronizer, the first connection portion is a part of the direct-gear synchronizer, and the second connection portion is a part of the low-gear synchronizer.

19. The power transmission system for a vehicle according to claim 8, wherein the conversion device output portion is suitable for being connected to the first conversion portion, so that the rotational speed of the conversion device input portion is the same as the rotational speed of the input end of the system power output portion; and
the conversion device output portion is suitable for being connected to the second conversion portion, so that the rotational speed of the conversion device input portion is reduced sequentially through the first conversion portion and the second conversion portion and then output to the system power output portion.

20. The power system for a vehicle according to claim 19, wherein the mode conversion device comprises:
a main reducer driven gear, wherein the main reducer driven gear is the conversion device input portion; and
a first conversion gear and a second conversion gear, wherein each of the main reducer driven gear, the first conversion gear and the second conversion gear is freely sleeved on a half shaft of the vehicle; and
a conversion device shaft, wherein a third conversion gear and a fourth conversion gear are fixed on the conversion device shaft, the first conversion gear is meshed with the third conversion gear, and the second conversion gear is meshed with the fourth conversion gear; and the first conversion gear is the first conversion portion, and the second conversion gear is the second conversion portion.

21. The power transmission system for a vehicle according to claim 8, wherein the conversion device output portion is suitable for being disconnected from each of the first conversion portion and the second conversion portion, so that the power source is suitable for directly driving the first motor generator through the speed change unit to perform power generation.

22. The power system for a vehicle according to claim 9, wherein the conversion device output portion is a shaft sleeve, one end of the shaft sleeve is fixedly connected to the input end of the system power output portion, each of that conversion portion that is of the first conversion portion and the second conversion portion and that is closer to the input end of the system power output portion, and the conversion device input portion is freely sleeved on the shaft sleeve, the shaft sleeve is sleeved on a half shaft of the vehicle, and that conversion portion that is of the first conversion portion and the second conversion portion and that is farther away from the input end of the system power output portion is freely sleeved on the half shaft of the vehicle.

23. The power system for a vehicle according to claim 9, wherein the conversion device output portion is a shaft sleeve, one end of the shaft sleeve is fixedly connected to the input end of the system power output portion, each of the first conversion portion and the second conversion portion is freely sleeved on the shaft sleeve, and the shaft sleeve is sleeved on a half shaft of the vehicle.

24. The power transmission system for a vehicle according to claim 4, wherein the mode conversion device further comprises a first conversion portion and a second conversion portion, the conversion device input portion is selectively connected to one of the first conversion portion and the second conversion portion, and each of the first conversion portion and the second conversion portion cooperates with the conversion device output portion to perform transmission.

25. The power transmission system for a vehicle according to claim 24, wherein
the conversion device input portion is suitable for being connected to the first conversion portion, so that the rotational speed of the conversion device input portion is the same as the rotational speed of the input end of the system power output portion; and
the conversion device input portion is suitable for being connected to the second conversion portion, so that the rotational speed of the conversion device input portion is reduced and then output to the system power output portion.

26. The power system for a vehicle according to claim 25, wherein
the mode conversion device comprises:
a main reducer driven gear, wherein the main reducer driven gear is the conversion device input portion; and
a conversion device shaft, wherein the main reducer driven gear is fixedly disposed on the conversion device shaft, a direct-gear driving gear and a low-gear driving gear are freely sleeved on the conversion device shaft, and the conversion device shaft is parallel to a half shaft of the vehicle;
the direct-gear driving gear is the first conversion portion, and the low-gear driving gear is the second conversion portion; and
the conversion device output portion comprises a direct-gear driven gear and a low-gear driven gear, the direct-gear driven gear is meshed with the direct-gear driving gear, the low-gear driven gear is meshed with the low-gear driving gear, and each of the direct-gear driven gear and the low-gear driven gear is fixedly connected to the input end of the system power output portion.

27. The power transmission system for a vehicle according to claim 24, wherein the conversion device input portion is suitable for being disconnected from each of the first conversion portion and the second conversion portion, so that the power source directly drives the first motor generator to perform power generation.

28. The power transmission system for a vehicle according to any one of claims 10, 20, and 26, wherein the speed change unit output portion is a main reducer driving gear, and the main reducer driving gear is meshed with the main reducer driven gear.

29. The power transmission system for a vehicle according to claim 1, wherein the speed change unit (200) comprises:
a speed change power input portion, wherein the speed change power input portion can be selectively connected to the power source, to transmit the power generated by the power source; and
a speed change power output portion, wherein the speed change power output portion is power-coupled to or power-decoupled from the speed change unit output portion through the power switching device, and when the speed change power output portion is power-coupled to the speed change unit output portion through the power switching device, the speed change power output portion is constructed to be suitable for outputting the power from the speed change power input portion to the speed change unit output portion through synchronization of a speed change unit synchronizer and through the power switching device.

30. The power transmission system for a vehicle according to claim 29, wherein the speed change power input portion comprises at least one input shaft, each input shaft can be selectively connected to the power source, and at least one driving gear is disposed on each input shaft; and the speed change power output portion comprises: at least one output shaft, at least one driven gear is disposed on each output shaft, the driven gear is meshed with the corresponding driving gear, the speed change unit output portion is at least one main reducer driving gear, and the at least one main reducer driving gear is fixed on the at least one output shaft in a one-to-one correspondence.

31. The power transmission system according to claim 1, wherein the speed change unit comprises:
a speed change power input portion, wherein the speed change power input portion can be selectively power-coupled to the power source, to transmit the power generated by the power source; and
a speed change power output portion, wherein the speed change power output portion is constructed to be suitable for outputting the power from the speed change power input portion to the output portion through the power switching device.

32. The power transmission system according to claim 31, wherein the speed change power input portion comprises: an input shaft, wherein the input shaft can be selectively connected to the power source; and a driving gear, wherein the driving gear is disposed on the input shaft; and
the speed change power output portion further comprises: an output shaft; and a driven gear, wherein the driven gear is disposed on the output shaft and is correspondingly meshed with the driving gear on the input shaft.

33. The power transmission system according to claim 32, wherein the power switching device is disposed on the output shaft, the speed change unit output portion can perform differential rotation relative to the output shaft, and the power switching device can be selectively power-coupled to the speed change unit output portion.

34. The power transmission system according to any one of claims 31 to 33, further comprising:
a third motor generator, wherein an output end of the third motor generator is set to perform transmission in cooperation with the speed change unit output portion.

35. The power transmission system according to claim 1, wherein the power switching device is a synchronizer, and the synchronizer is set to be suitable for selectively performing synchronization between the speed change unit output portion and the speed change unit.

36. The power transmission system according to claim 1, wherein the power switching device is a clutch, and the clutch is set to be suitable for performing power transmission or disconnection between the speed change unit output portion and the speed change unit.

37. The power transmission system for a vehicle according to claim 1, wherein the system power output portion is a differential, and comprises two half shaft gears, and the two half shaft gears and two half shafts of the vehicle are in a one-to-one correspondence; and
the power transmission system for the vehicle further comprises: a power switching on/off device, and the power switching on/off device is suitable for selectively connecting at least one of the two half shaft gears to a corresponding half shaft of the vehicle.

38. The power transmission system for a vehicle according to claim 37, wherein the power switching on/off device is a clutch or a synchronizer.

39. The power transmission system for a vehicle according to claim 1, further comprising: a second motor generator, wherein the second motor generator is located between the power source and the speed change unit, one end of the second motor generator is directly power-coupled to the power source, and another end of the second motor generator is selectively power-coupled to the speed change unit.

40. The power transmission system for a vehicle according to claim 1, further comprising: a second motor generator, wherein the second motor generator is located between the power source and the speed change unit, one end of the second motor generator is selectively power-coupled to the power source, and another end of the second motor generator is selectively power-coupled to the speed change unit.

41. The power transmission system for a vehicle according to claim 1, wherein the system power output portion is suitable for outputting power to two wheels of the vehicle; and
the power transmission system for the vehicle further comprises an electric driving system, and the electric driving system is configured to drive two other wheels of the vehicle.

42. The power transmission system for a vehicle according to claim 41, wherein the electric driving system comprises a driving system input portion and a driving system output portion, and the driving system output portion is suitable for outputting power from the driving system input portion to the two other wheels.

43. The power transmission system for a vehicle according to claim 42, wherein the electric driving system further comprises an electric driving system power output portion, and the driving system output portion is suitable for outputting power from the driving system input portion to the two other wheels through the electric driving system power output portion.

44. The power transmission system for a vehicle according to claim 42, wherein the driving system input portion is a driving motor generator, and the driving system output portion is a gear reducer.

45. The power transmission system for a vehicle according to claim 44, wherein the driving system input portion comprises two driving motor generators; and the driving system output portion comprises two driving system output sub-portions, and each of the driving system output sub-portions is suitable for outputting power from a corresponding driving motor generator to one corresponding wheel of the two other wheels.

46. The power transmission system for a vehicle according to claim 45, wherein the two other wheels are selectively synchronized, the two driving motor generators are selectively synchronized or the two driving system output sub-portions are selectively synchronized.

47. The power transmission system for a vehicle according to claim 41, wherein the electric driving system comprises two wheel motors, each of the wheel motors directly drives one corresponding wheel of the two other wheels, and the two other wheels are selectively synchronized.

48. The power transmission system for a vehicle according to claim 1, wherein the power transmission system for the vehicle has a first power source driving mode, and when the power transmission system for the vehicle is in the first power source driving mode, the first motor generator does not work, the speed change unit is power-coupled to the power source, the mode conversion device is power-coupled to the speed change unit output portion and the system power output portion, the speed change unit is power-coupled to the speed change unit output portion through the power switching device, power output by the power source is output to the system power output portion sequentially through the speed change unit, the power switching device, the speed change unit output portion and the mode conversion device, and the mode conversion device outputs, to the system power output portion at an original speed, the power received from the speed change unit output portion.

49. The power transmission system for a vehicle according to claim 1, wherein the power transmission system for the vehicle has a second power source driving mode, and when the power transmission system for the vehicle is in the second power source driving mode, the first motor generator does not work, the speed change unit is power-coupled to the power source, the mode conversion device is power-coupled to the speed change unit output portion and the system power output portion, the speed change unit is power-coupled to the speed change unit output portion through the power switching device, power output by the power source is output to an input end of the system power output portion sequentially through the speed change unit, the power switching device, the speed change unit output portion and the mode conversion device, and the mode conversion device decelerates the power received from the speed change unit output portion and outputs the decelerated power to the system power output portion.

50. The power transmission system for a vehicle according to claim 1, wherein the power transmission system for the vehicle has a first pure electric driving mode, and when the power transmission system for the vehicle is in the first pure electric driving mode, the power source does not work, the mode conversion device is power-coupled to the speed change unit output portion and the system power output portion, the speed change unit is power-coupled to the speed change unit output portion through the power switching device, power output by the first motor generator is output to the system power output portion sequentially through the speed change unit, the power switching device, the speed change unit output portion, and the mode conversion device, and the mode conversion device outputs, to the system power output portion at an original speed, the power received from the speed change unit output portion.

51. The power transmission system for a vehicle according to claim 1, wherein the power transmission system for the vehicle has a second pure electric driving mode, and when the power transmission system for the vehicle is in the second pure electric driving mode, the power source does not work, the mode conversion device is power-coupled to the speed change unit output portion and the system power output portion, the speed change unit is power-coupled to the speed change unit output portion through the power switching device, power output by the first motor generator is output to an input end of the system power output portion sequentially through the speed change unit, the power switching device, the speed change unit output portion, and the mode conversion device, and the mode conversion device decelerates the power received from the speed change unit output portion and outputs the decelerated power to the system power output portion.

52. The power transmission system for a vehicle according to claim 1, wherein the power transmission system for the vehicle has a first hybrid driving mode, and when the power transmission system for the vehicle is in the first hybrid driving mode, both the power source and the first motor generator work, the speed change unit is power-coupled to the power source, the mode conversion device is power-coupled to the speed change unit output portion and the system power output portion, the speed change unit is power-coupled to the speed change unit output portion through the power switching device, power output by the power source is output to the system power output portion sequentially through the speed change unit, the power switching device, the speed change unit output portion and the mode conversion device, power output by the first motor generator is output to the system power output portion sequentially through the speed change unit, the power switching device, the speed change unit output portion and the mode conversion device, the power output by the power source and the power output by the first motor generator are coupled and then output to the mode conversion device, and the mode conversion device outputs, to the system power output portion at an original speed, the power received from the speed change unit output portion.

53. The power transmission system for a vehicle according to claim 1, wherein the power transmission system for the vehicle has a second hybrid driving mode, and when the power transmission system for the vehicle is in the second hybrid driving mode, both the power source and the first motor generator work, the speed change unit is power-coupled to the power source, the mode conversion device is power-coupled to the speed change unit output portion and the system power output portion, the speed change unit is power-coupled to the speed change unit output portion through the power switching device, power output by the power source is output to the system power output portion sequentially through the speed change unit, the power switching device, the speed change unit output portion and the mode conversion device, power output by the first motor generator is output to the system power output portion sequentially through the speed change unit, the power switching device, the speed change unit output portion and the mode conversion device, the power output by the power source and the power output by the first motor generator are coupled and then output to the mode conversion device, and the mode conversion device decelerates the power received from the speed change unit output portion and outputs the decelerated power to the system power output portion.

54. The power transmission system for a vehicle according to claim 1, wherein the power transmission system for the vehicle has a first driving power generation mode, and when the power transmission system for the vehicle is in the first driving power generation mode, the power source works, the speed change unit is power-coupled to the power source, the mode conversion device is power-coupled to the speed change unit output portion and the system power output portion, the speed change unit is power-coupled to the speed change unit output portion through the power switching device, a part of power output by the power source is output to the system power output portion sequentially through the speed change unit, the power switching device, the speed change unit output portion and the mode conversion device, the mode conversion device outputs, to the system power output portion at an original speed, the power received from the speed change unit output portion, and another part of the power output by the power source is output to the first motor generator through the speed change unit, to drive the first motor generator to perform power generation.

55. The power transmission system for a vehicle according to claim 1, wherein the power transmission system for the vehicle has a second driving power generation mode, and when the power transmission system for the vehicle is in the second driving power generation mode, the power source works, the speed change unit is power-coupled to the power source, the mode conversion device is power-coupled to the speed change unit output portion and the system power output portion, the speed change unit is power-coupled to the speed change unit output portion through the power switching device, a part of power output by the power source is output to the system power output portion sequentially through the speed change unit, the power switching device, the speed change unit output portion and the mode conversion device, the mode conversion device decelerates the power received from the speed change unit output portion and outputs the decelerated power to the system power output portion, and another part of the power output by the power source is output to the first motor generator through the speed change unit, to drive the first motor generator to perform power generation.

56. The power transmission system for a vehicle according to claim 1, wherein the power transmission system for the vehicle has a first braking energy recycling mode, and when the power transmission system for the vehicle is in the first braking energy recycling mode, the mode conversion device is power-coupled to the speed change unit output portion and the system power output portion, the speed change unit is power-coupled to the speed change unit output portion through the power switching device, power from wheels of the vehicle drives the first motor generator sequentially through the system power output portion, the mode conversion device, the speed change unit output portion, the power switching device, and the speed change unit to perform power generation, and the mode conversion device outputs, to the speed change unit output portion at an original speed, the power received from the system power output portion.

57. The power transmission system for a vehicle according to claim 1, wherein the power transmission system for the vehicle has a second braking energy recycling mode, and when the power transmission system for the vehicle is in the second braking energy recycling mode, the mode conversion device is power-coupled to the speed change unit output portion and the system power output portion, the speed change unit is power-coupled to the speed change unit output portion through the power switching device, power from wheels of the vehicle drives the first motor generator sequentially through the system power output portion, the mode conversion device, the speed change unit output portion, the power switching device, and the speed change unit to perform power generation, and the mode conversion device accelerates the power received from the system power output portion and outputs the accelerated power to the speed change unit output portion.

58. The power transmission system for a vehicle according to claim 1, wherein the power transmission system for the vehicle has a reverse-drive starting mode, and when the power transmission system for the vehicle is in the reverse-drive starting mode, the power output by the first motor generator unit is output to the power source through the speed change unit, to drive the power source to start.

59. The power transmission system for a vehicle according to claim 39 or 40, wherein the power transmission system for the vehicle has a first stationary power generation mode, and when the power transmission system for the vehicle is in the first stationary power generation mode, the second motor generator is power-coupled to the power source, the mode conversion device disconnects the speed change unit output portion from the system power output portion, the speed change unit is disconnected from the speed change unit output portion through the power switching device, and power output by the power source directly drives the second motor generator to perform power generation.

60. The power transmission system for a vehicle according to claim 39 or 40, wherein the power transmission system for the vehicle has a second stationary power generation mode, and when the power transmission system for the vehicle is in the second stationary power generation mode, the second motor generator is power-coupled to the power source, the second motor generator is power-coupled to and the speed change unit, the mode conversion device disconnects the speed change unit output portion from the system power output portion, the speed change unit is power-coupled to the speed change unit output portion through the power switching device, a part of power output by the power source directly drives the second motor generator to perform power generation, and another part of the power output by the power source is output to the first motor generator sequentially through the second motor generator and the speed change unit and drives the first motor generator to perform power generation.

61. The power transmission system for a vehicle according to claim 39 or 40, wherein the power transmission system for the vehicle has a third driving power generation mode, and when the power transmission system for the vehicle is in the third driving power generation mode, the power source works, the second motor generator is power-coupled to the power source, the second motor generator is power-coupled to the speed change unit, the mode conversion device is power-coupled to the speed change unit output portion and the system power output portion, the speed change unit is power-coupled to the speed change unit output portion through the power switching device, a part of power output by the power source is output to the system power output portion sequentially through the speed change unit, the power switching device, the speed change unit output portion, and the mode conversion device, the mode conversion device outputs, to the system power output portion at an original speed, the power received from the speed change unit output portion or decelerates the power received from the speed change unit output portion and then outputs the decelerated power to the system power output portion, and another part of the power output by the power source directly drives the second motor generator to perform power generation.

62. The power transmission system for a vehicle according to claim 39 or 40, wherein the power transmission system for the vehicle has a fourth driving power generation mode, and when the power transmission system for the vehicle is in the fourth driving power generation mode, the power source works, the second motor generator is power-coupled to the power source, the second motor generator is power-coupled to the speed change unit, the mode conversion device is power-coupled to the speed change unit output portion and the system power output portion, the speed change unit is power-coupled to the speed change unit output portion through the power switching device, a first part of power output by the power source is output to the system power output portion sequentially through the speed change unit, the power switching device, the speed change unit output portion, and the mode conversion device, the mode conversion device outputs, to the system power output portion at an original speed, the power received from the speed change unit output portion or decelerates the power received from the speed change unit output portion and then outputs the decelerated power to the system power output portion, a second part of the power output by the power source is output to the first motor generator through the speed change unit, to drive the first motor generator to perform power generation, and a third part of the power output by the power source directly drives the second motor generator to perform power generation.

63. The power transmission system for a vehicle according to claim 39 or 40, wherein the power transmission system for the vehicle has a rapid starting mode, and when the power transmission system for the vehicle is in the rapid starting mode, the second motor generator is power-coupled to the power source, and the power output by the second motor generator directly drives the power source to start.

64. The power transmission system for a vehicle according to claim 40, wherein the power transmission system for the vehicle has a third braking energy recycling mode, and when the power transmission system for the vehicle is in the third braking energy recycling mode, the mode conversion device is power-coupled to the speed change unit output portion and the system power output portion, the speed change unit is power-coupled to the speed change unit output portion through the power switching device, the second motor generator is disconnected from the power source, power from wheels of the vehicle drives the second motor generator sequentially through the system power output portion, the mode conversion device, the speed change unit output portion, the power switching device, and the speed change unit to perform power generation, and the mode conversion device outputs, to the speed change unit output portion at an original speed, the power received from the system power output portion.

65. The power transmission system for a vehicle according to claim 40, wherein the power transmission system for the vehicle has a fourth braking energy recycling mode, and when the power transmission system for the vehicle is in the fourth braking energy recycling mode, the mode conversion device is power-coupled to the speed change unit output portion and the system power output portion, the second motor generator is disconnected from the power source, the speed change unit is power-coupled to the speed change unit output portion through the power switching device, the second motor generator is disconnected from the power source, power from wheels of the vehicle drives the second motor generator sequentially through the system power output portion, the mode conversion device, the speed change unit output portion, the power switching device, and the speed change unit to perform power generation, and the mode conversion device accelerates the power received from the system power output portion and outputs the accelerated power to the speed change unit output portion.

66. A power transmission system for a vehicle, comprising:
a power source;
a double clutch, wherein the double clutch has an input end, a first output end and a second output end, and an output end of the power source is connected to the input end of the double clutch;
a first input shaft and a second input shaft, wherein the first input shaft is connected to the first output end, the second input shaft is connected to the second output end, the second input shaft is coaxially sleeved on the first input shaft, at least one first driving gear is fixedly disposed on and at least one second driving gear is freely sleeved on each of the first input shaft and the second input shaft, a reverse-gear driving gear is further fixedly disposed on one of the second input shaft and the first input shaft, and the at least one second driving gear is selectively connected to a corresponding input shaft;
a power output shaft, wherein a reverse-gear driven gear and at least one first driven gear are freely sleeved on the power output shaft, the at least one first driven gear is correspondingly meshed with the at least one first driving gear, at least one second driven gear is fixedly disposed on the power output shaft, the at least one second driven gear is correspondingly meshed with the at least one second driving gear, and each of the reverse-gear driven gear and the at least one first driven gear is selectively connected to the power output shaft;
a reverse-gear intermediate shaft, wherein an idle gear is fixedly disposed on the reverse-gear intermediate shaft, and the idle gear is meshed with the reverse-gear driving gear and is meshed with the reverse-gear driven gear;
a first motor generator, wherein the first motor generator is power-coupled to the power output shaft;
a main reducer driving gear;
a power switching device, wherein the power output shaft is power-coupled to or power-decoupled from the main reducer driving gear through the power switching device;
a main reducer driven gear, wherein the main reducer driven gear is meshed with the main reducer driving gear;
a system power output portion, wherein the main reducer driven gear is selectively connected to an input end of the system power output portion, so that power received by the main reducer driven gear is suitable for being output to the system power output portion at an original speed or being decelerated and then output to the system power output portion, and the system power output portion is suitable for outputting the power from the main reducer driven gear to two front wheels; and
a rear wheel motor generator, wherein the rear wheel motor generator drives two rear wheels through a speed reduction mechanism.

67. A power transmission system for a vehicle, comprising:
a power source;
a double clutch, wherein the double clutch has an input end, a first output end and a second output end, and an output end of the power source is connected to the input end of the double clutch;
a first input shaft and a second input shaft, wherein the first input shaft is connected to the first output end, the second input shaft is connected to the second output end, the second input shaft is coaxially sleeved on the first input shaft, and one driving gear is fixedly disposed on each of the first input shaft and the second input shaft;
a power output shaft, wherein two driven gears are fixedly disposed on the power output shaft, and the two driven gears are respectively correspondingly meshed with the driving gear on the first input shaft and the driving gear on the second input shaft;
a first motor generator, wherein the first motor generator performs indirect transmission with one of the driving gears through an intermediate gear;
a main reducer driving gear, wherein the main reducer driving gear can perform differential rotation relative to the power output shaft;
a connection gear ring, wherein the connection gear ring is fixed to the main reducer driving gear;
a main reducer driven gear, wherein the main reducer driven gear is meshed with the main reducer driving gear;
a system power output portion, wherein the main reducer driven gear is selectively connected to an input end of the system power output portion, so that power received by the main reducer driven gear is suitable for being output to the system power output portion at an original speed or being decelerated and then output to the system power output portion, and the system power output portion is suitable for outputting the power from the main reducer driven gear to two front wheels; and
a synchronizer, wherein the synchronizer is disposed on the power output shaft and is set to be selectively connected to the connection gear ring; and
a rear wheel motor generator, wherein the rear wheel motor generator drives two rear wheels through a speed reduction mechanism.

68. A vehicle, comprising the power transmission system for a vehicle according to any one of claims 1 to 67.
